**Europäisches Patentamt**

**European Patent Office**

**Office européen des brevets**

(11) Veröffentlichungsnummer: **0 193 201**
**B1**

(12) **EUROPÄISCHE PATENTSCHRIFT**

(45) Veröffentlichungstag der Patentschrift:
20.09.89

(21) Anmeldenummer: 86102604.5

(22) Anmeldetag: 28.02.86

(51) Int. Cl.⁴: **A47C 13/00, A47B 45/00**

(54) **Grundelement für ein überwiegend aus Kunststoff hergestelltes Standmöbel und Verfahren zu seiner Herstellung.**

(30) Priorität: 01.03.85 DE 3507160

(43) Veröffentlichungstag der Anmeldung:
03.09.86 Patentblatt 86/36

(45) Bekanntmachung des Hinweises auf die Patenterteilung:
20.09.89 Patentblatt 89/38

(84) Benannte Vertragsstaaten:
AT BE CH DE FR GB IT LI

(56) Entgegenhaltungen:
AT-B- 239 517
DE-A- 2 429 004
DE-A- 2 632 696
US-A- 4 275 666
US-A- 4 467 927

(73) Patentinhaber: Wilke, Rudolf, Dipl.-Wirtsch.-Ing.,
Marsberger Strasse 2, D-3548 Arolsen(DE)

(72) Erfinder: Wilke, Rudolf, Dipl.-Wirtsch.-ing., Marsberger
Strasse 2, D-3548 Arolsen(DE)

(74) Vertreter: Freiherr von Schorlemer, Reinfried,
Dipl.-Phys., Patentanwalt Brüder-Grimm-Platz 4,
D-3500 Kassel(DE)

**Beschreibung**

Die Erfindung betrifft ein Grundgestell der im Oberbegriff des Anspruchs 1 definierten Gattung und ein Verfahren nach dem Oberbegriff des Anspruchs 14.

Die Herstellung bekannter Grundelemente dieser Art (DE-GM 7 601 245, US-PS 4 275 666) in einem Stück durch Spritzguß bereitet erhebliche spriztechnische Schwierigkeiten, insbesondere wenn es sich um tatsächliche Beine und nicht lediglich um Ansätze zum Aufstecken von separat hergestellten Beinen handeln soll. Je nach Lage der Angußstelle ergeben sich Fließfehler, die das Grundgestell als Ganzes unbrauchbar machen, oder deutlich sichtbare Angußpunkte und andere Oberflächenfehler, die kostspielige Nachbearbeitungen erforderlich machen. Insbesondere dort, wo die Beine mit dem Rahmen verbunden sind bzw. die Rahmenebene durchschneiden, sind Fließfehler und sichtbare Oberflächenfehler in den Grundgestellen bisher nicht zu vermeiden.

Dasselbe trifft im Prinzip auch für andere bekannte Grundgestelle zu (DE-GM 8 221 774), die aus wenigstens drei Gestellteilen mit je zwei an deren Enden befindlichen Beinen zusammengesetzt werden. Allerdings liegen hier die Verhältnisse insofern etwas günstiger, als diese Gestellteile keine geschlossenen, z.B. ringförmigen Rahmenteile, sondern nur jeweils ein gerades Rahmenelement aufweisen. Daher sind, sofern der Anguß am Ende eines der beiden Beine erfolgt, keine Verzweigungen für den Fluß des Spritzmaterials vorhanden.

Dieser spriztechnische Vorteil muß allerdings mit dem unerwünschten Nachteil erkauft werden, daß das Grundgestell wenigstens dreiteilig ist und daher nicht sichtbare Stoßfugen aufweist, sondern auch einen komplizierten Zusammenbau der daraus herstellbaren Möbelstücke zur Folge hat.

Der Erfindung liegt die Aufgabe zugrunde, eine Möglichkeit zu schaffen, das Grundelement der eingangs bezeichneten Gattung ohne aufwendige Nachbearbeitung und dennoch so herstellbar zu machen, daß Fließ- und Oberflächenfehler weitgehend vermieden werden.

Zur Lösung dieser Aufgabe sind die kennzeichnenden Merkmale des Anspruchs 1; und 14 vorgesehen.

Die Anwendung von Einlegeteilen ist in der Spritzgießtechnik allgemein bekannt (AT-PS 239 517), beispielsweise zur Herstellung von Spritzgußteilen mit Hinterschneidungen. Dabei handelt es sich aber nicht um verlorene, im Spritzgußteil verbleibende Einlegeteile, die den Fluß des Spritzgußmaterials steuern und verbessern sollen, sondern um wiederverwendbare, zusätzlich in die Spritzgußform eingebrachte Einlegeteile, die das Eindringen von Spritzgußmaterial in bestimmte Zonen des Spritzgußteils verhindern sollen und nach dem Spritzgußvorgang wieder aus dem Spritzgußteil entfernt werden.

Die Erfindung bringt den überraschenden Vorteil mit sich, daß das Einlegeteil die Herstellung des gesamten Grundgestells aus einem Stück möglich macht und sichtbare Fließ- oder Oberflächenfehler nahezu vollständig vermieden werden.

Durch geeignete Ausbildung des Einlegeteils können außerdem etwa noch verbleibende, nicht ganz auszuschließende Oberflächenunregelmäßigkeiten zumindest an Stellen des Grundgestells verlegt werden, die bei dessen Gebrauch praktisch unsichtbar sind.

Im Gegensatz zu den bekannten Stangen- oder Baukastensystemen umfaßt das erfindungsgemäße Grundelement in Form eines Grundgestells bereits alle wesentlichen tragenden Teile für ein Standmöbel. Da es nicht aus einzelnen Teilen zusammengesetzt, sondern als Ganzes einstückig hergestellt ist, weist es keinerlei Stoßfugen und daher eine hohe Stabilität und Standsicherheit auf. Daneben kann es bei Bedarf in einfacher Weise mit Stangen-, Bogen- und Knotenelementen herkömmlicher Bauart kombiniert und daher als Hauptbestandteil eines Standmöbelsystems verwendet werden. Das erfindungsgemäße Verfahren ermöglicht in Verbindung mit dem Einlegeteil eine fehlerfreie Herstellung des Grundelements durch Spritzgießen.

Weitere vorteilhafte Merkmale der Erfindung ergeben sich aus den Unteransprüchen .

Die Erfindung wird nachfolgend in Verbindung mit der beiliegenden Zeichnung an einem Ausführungsbeispiel näher erläutert.

Es zeigen:

Fig. 1 bis 7 perspektivische Ansichten von sieben mit Hilfe des erfindungsgemäßen Standmöbelsatzes hergestellten Standmöbeln;

Fig. 8 einen Längsschnitt durch ein Bein eines erfindungsgemäßen Grundgestells des Standmöbelsatzes;

Fig. 9 eine teilweise geschnittene Draufsicht auf eine Hälfte des Grundgestells nach Fig.8;

Fig.10 einen Längsschnitt durch eine durchlaufende Säule eines weiteren Standmöbels des erfindungsgemäßen Standmöbelsatzes;

Fig.11 einen Längsschnitt durch einen erfindungsgemäßen Plattenhalter des Standmöbelsatzes;

Fig.12 eine Draufsicht auf den Plattenhalter nach Fig.12 bei abgenommener Deckkappe;

Fig.13 bis 15 je eine Unter-Vorder und Rückansicht des Plattenhalters nach Fig. 12;

Fig.16 einen Längsschnitt durch eine Stoßstelle zwischen einem Bein des Grundgestells und einem angrenzenden Rohrelement;

Fig.17 einen Schnitt längs der Linie XVII-XVII der Fig.16;

Fig.18 und 19 je eine Vorder-und Seitenansicht eines erfindungsgemäßen, in die Stoßstelle nach Fig.16 eingesetzten Verbindungselements;

Fig.20 bis 22 bzw. 23 bis 26 zwei weitere Ausführungsformen des erfindungsgemäßen Verbindungselements in den Fig. 16 bis 19 entsprechenden Darstellungen;

Fig. 27 eine teilweise geschnittene Vorderansicht einer erfindungsgemäßen Schale des Standmöbelsatzes einschließlich einer zu ihrer Befestigung an einem Bein des Grundgestells bestimmten Halterung;

Fig.28 einen Querschnitt durch das Rohrelement nach Fig.27 in der Höhe der Halterung;

Fig.29 eine Vorderansicht der Halterung nach Fig.27 und 28;

Fig.30 eine teilweise geschnittene Vorderansicht eines erfindungsgemäßen Rahmenelements des Standmöbelsatzes;

Fig.31 eine teilweise geschnittene Vorderansicht eines weiteren Standmöbels des erfindungsgemäßen Standmöbelsatzes;

Fig.32 und 33 je einen Längsschnitt durch einen erfindungsgemäßen Fuß bzw. eine Abdeckkappe des Standmöbelsatzes;

Fig.34 eine Seitenansicht eines erfindungsgemäßen Garderobehakens des Standmöbelsatzes;und

Fig.35 einen Schnitt längs der Linie XXXV-XXXV der Fig.34.

Fig. 36 einen schematischen Längsschnitt durch eine Spritzform zur Herstellung eines Grundelements mit Einlegeteil;

Fig. 37 einen vergrößerten Ausschnitt aus Fig. 36;

Fig. 38 und 39 Querschnitte A-A und B-B nach Fig. 37;

Fig. 40 einen Schnitt durch ein Grundgestell mit Einlegeteil analog Fig. 9;

Fig. 41 einen vergrößerten Ausschnitt aus Fig. 40; und

Fig. 42 den Querschnitt C-C nach Fig. 41.

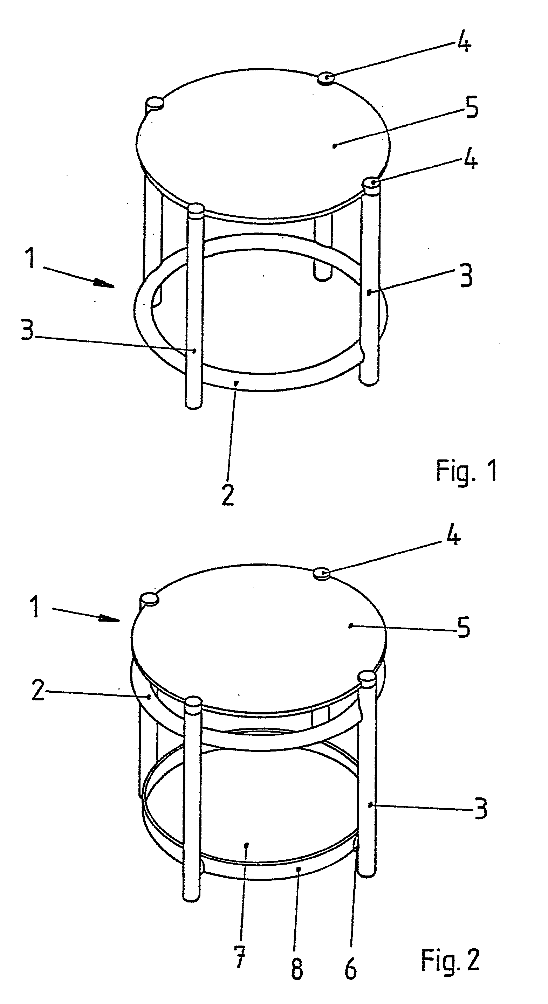

Fig. 1 zeigt einen Beistelltisch des erfindungsgemäßen Standmöbelsatzes. Der Beistelltisch enthält ein Grundelement in Form eines für alle Standmöbel des Satzes einheitlichen Grundgestells 1, das aus einem Rahmen 2 und vier daran befestigten Beinen 3 besteht. An den oberen Enden der Beine 3 sind jeweils Plattenhalter 4 angebracht, die ein Plattenelement in Form eines Ablageelements 5 tragen, das beispielsweise eine Glasplatte ist. Der Rahmen 2 ist in einem unteren Bereich der Beine 3 angeordnet.

Fig. 2 zeigt einen dem Beistelltisch nach Fig.1 entsprechenden Beistelltisch, wobei jedoch das Grundgestell 1 im Vergleich zu Fig.1 und 180° verschwenkt angeordnet ist, so daß der Rahmen 2 in einem oberen Bereich der Beine 3 liegt. Außerdem sind an den Beinen 3 Zusatzelemente in Form von Halterungen 6 befestigt, die eine Schale 7 mit einem hochstehenden Rand 8 tragen.

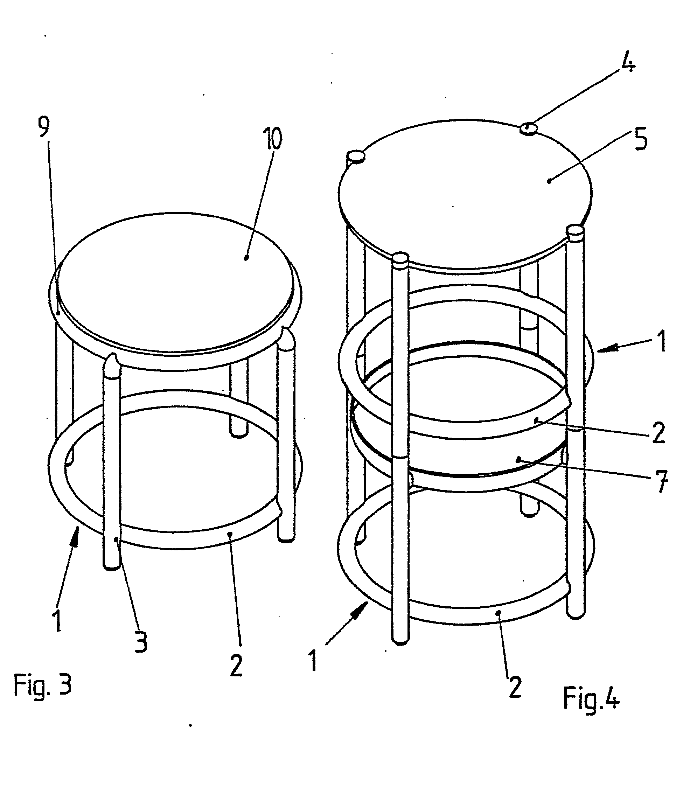

Gemäß Fig. 3 ist an den oberen Enden der Beine 3 des Grundgestells 1 ein Plattenelement in Form eines Rahmenelements 9 befestigt, in welches ein Einsatz in Form einer Sitzplatte 10 eingelegt ist, so daß ein Hocker entsteht.

Bei dem Standmöbel nach Fig.4 handelt es sich um einen doppelten Beistelltisch. Dieser besteht aus zwei Grundgestellen 1, wobei der Rahmen 2 entsprechend Fig. 1 jeweils in der unteren Position angeordnet ist. Dabei sind jeweils die oberen Enden der Beine 3 des unteren Grundgestells mit den unteren Enden der vier Beine 3 des oberen Grungestells fest verbunden. Das obere Grundgestell 1 ist entsprechend Fig.1 durch die das Ablageelement 5 tragenden Plattenhalter 4 ergänzt. Im unteren Grundgestell 1, jedoch in einem oberen Teil desselben, ist eine Schale 7 entsprechend Fig. 2 befestigt.

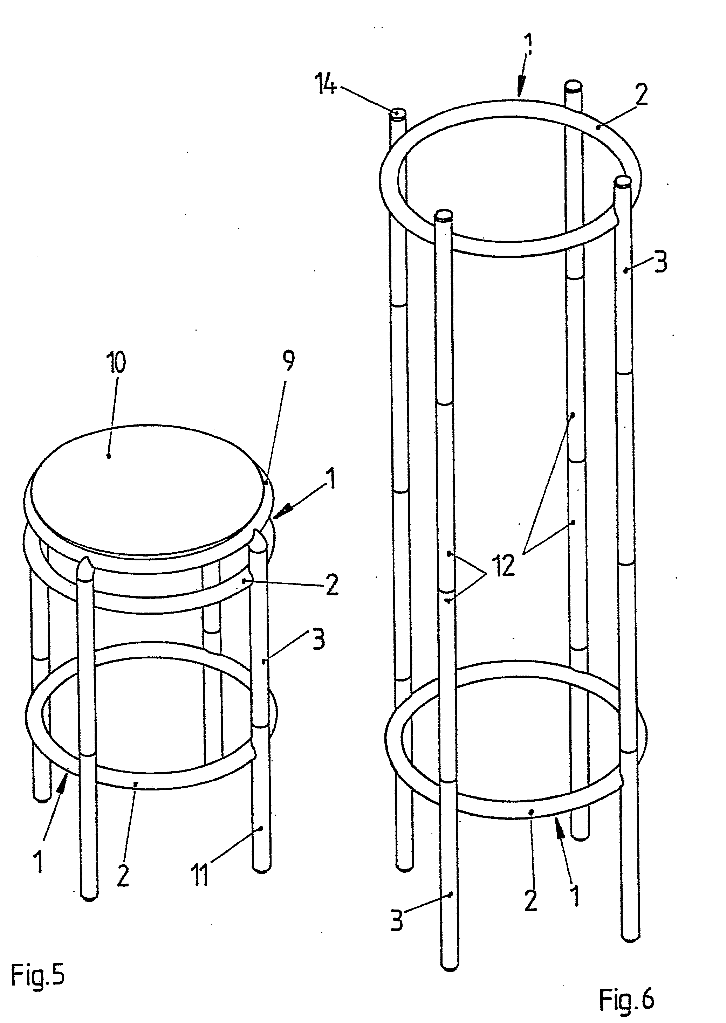

Fig. 5 zeigt einen Barhocker. Dieser besteht aus einem entsprechend Fig. 2 angeordneten Grundgestell 1 und einem darüber angeordneten weiteren, ebenfalls entsprechend Fig.2 angeordneten Grundgestell 1. An den oberen Enden der Beine 3 des oberen Grundgestells 1 ist entsprechend Fig.3 ein eine Sitzplatte 10 tragendes Rahmenelement 9 befestigt. Das untere Grundgestell 1 weist Beine 11 auf, die im Vergleich zu den Beinen 3 des Grundgestells 1 nach Fig.2 etwas verkürzt sind,indem diese nach der Herstellung des einheitlichen Grundgestells in der gewünschten Höhe abgeschnitten werden. Auf dem Rahmen 2 des unteren Grundgestells 1 können die Füße des Benutzers abgestellt werden.

Im Gegensatz zu den bisherigen Ausführungsformen weist das Standmöbel nach Fig.6 je ein unteres und oberes Grundgestell 1 auf, doch sind deren Beine 3 nicht direkt, sondern durch je zwei dazwischen angeordnete Grundelemente in Form von Stangen-oder Rohrelement 12 miteinander verbunden. Die Verbindung erfolgt wiederum über die stirnseitigen Enden der Beine 3 bzw. Stangen-oder Rohrelemente 12. Sowohl des untere als auch das obere Grundgestell befinden sich in der Lage nach Fig.2. Die oberen Enden der Beine 3 des oberen Grundgestells sind mit Abdeckkappen 14 abgeschlossen. Das Standmöbel nach Fig.6 kann als Garderobeständer benutzt werden, indem der Rahmen 2 und die Beine 3 des oberen Grundgestells zum Aufhängen von Kleiderbügeln, zum Aufhängen von Taschen, zum Ablegen von Hüten oder dergleichen verwendet werden.

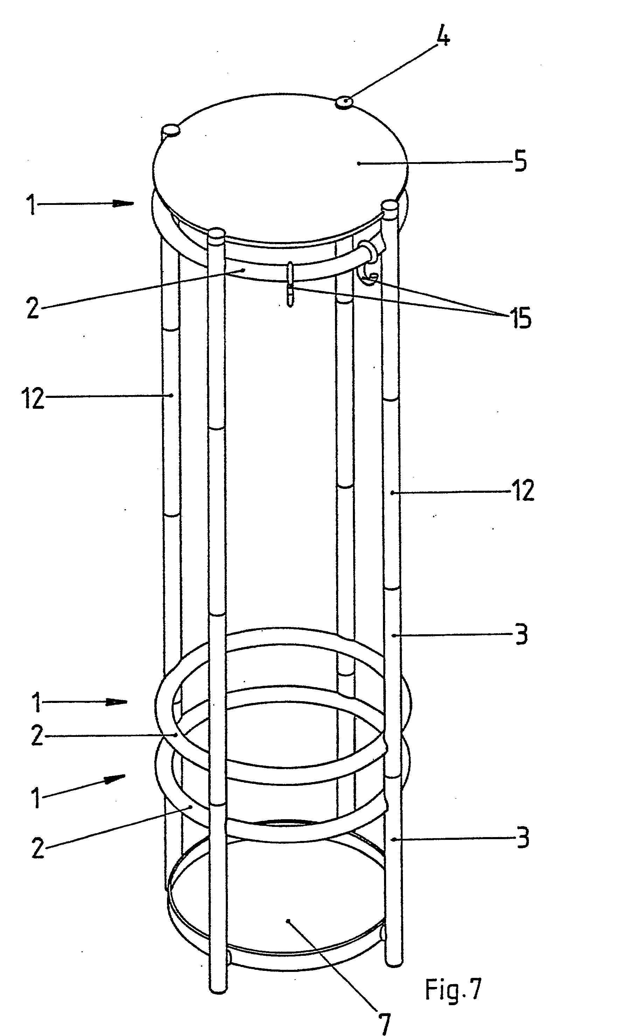

Auch Fig. 7 zeigt einen Garderobeständer. Im Gegensatz zu Fig.6 ist dieser jedoch aus drei Grundgestellen 1 und je einem Stangen- oder Rohrelement 12 zusammengesetzt. Dabei befindet sich das untere Grundgestell 1 in der Lage nach Fig.2, das mittlere Grundgestell in der Lage nach Fig.1 und das obere Grundgestell wiederum in der Lage nach Fig.2, während die Stangen- oder Rohrelement 12 zwischen dem mittleren und dem oberen Grundgestell eingefügt sind. Außerdem ist in das untere Grundgestell entsprechend Fig.2 eine Schale 7 eingehängt. Infolgedessen kann der von dem Rahmen 2 und Beinen 3 des unteren und mittleren Grundgestells sowie von der Schale 7 umhüllte Raum als Ablage für Schirme oder dergleichen benutzt werden. Ferner ist auf die oberen Enden der Beine des oberen Grundgestells 1 entsprechend Fig.1 ein Ablageelement 5 aufgesetzt. Schließlich sind an den Rahmen 2 des oberen Grundgestells 1 Garderobehaken 15 angehängt.

Der beschriebene Standmöbelsatz zeichnet sich durch seine vielfachen Variationsmöglichkeiten aus, die sämtlich von einem, zwei oder mehr Grundgestellen 1 Gebrauch machen. Dadurch ist auch bedingt, daß alle möglichen Variationen stets Traggestelle mit derselben Grundform, hier in Zylinderform aufweisen, wobei alle Traggestelle aus Säulen, die durch aneinanderstoßende Beine 3 und oder Stangen-oder Rohrelement 12 gebildet sind, und aus die Säulen quer miteinander verbindenden Rahmen 2 bestehen.

Obwohl es grundsäzlich möglich wäre, das Grundgestell 1 aus zwei oder mehr Teilen, z.B. zwei identischen Hälften, herzustellen, wird es vorzugsweise als Ganzes einstückig aus Kunststoff durch Spritzguß hergestellt. Dadurch wird einerseits erreicht, daß das Grundgestell nicht seinerseits aus einer Vielzahl von Einzelelementen zusammengefügt werden muß, sondern als Bauelement bereits alle wesentlichen tragenden Teile der herstellbaren Standmöbel enthält, insbesondere einen für die Quersteifigkeit wichtigen Rahmen 2 und die für die Standsicherheit wichtigen Beine 3.

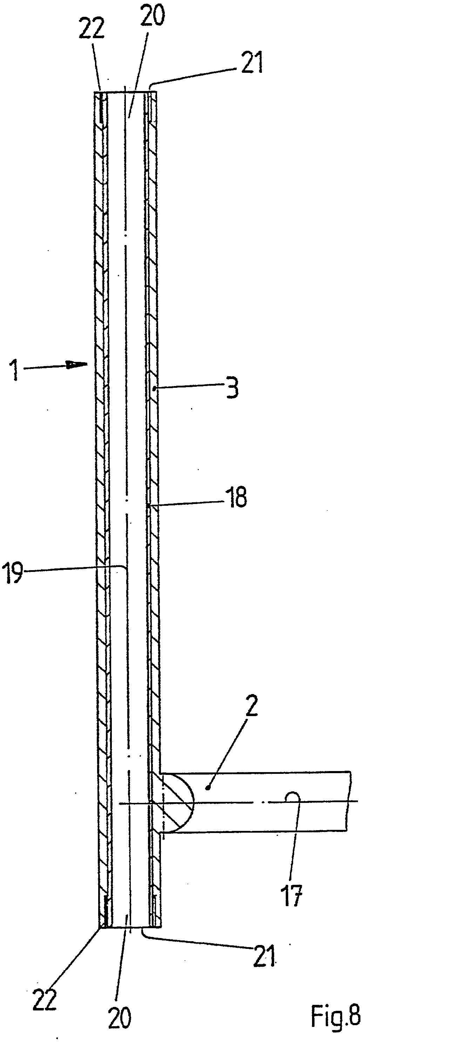

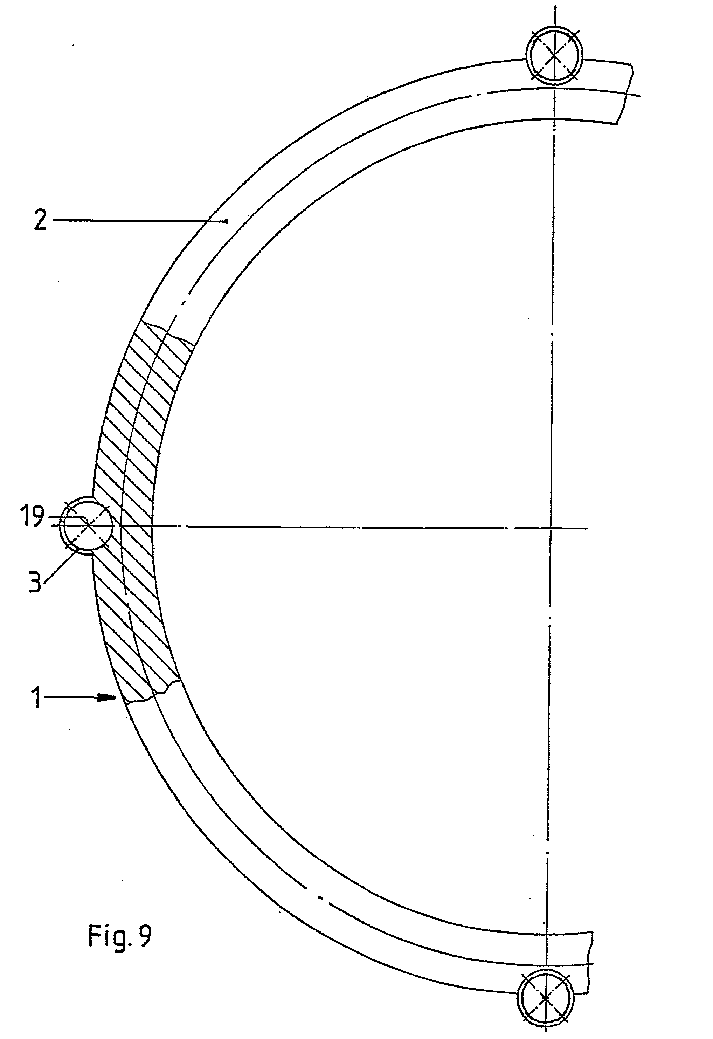

Wie Fig. 8 und 9 zeigen, weist ein als Ganzes durch Spritzguß hergestelltes Grundgestell 1 keinerlei Stoßfugen auf. Um bei gegebener Größe eine optimale Standsicherheit zu erzielen, sind die Beine 3 vorzugsweise am Außenumfang des Rahmens 2 angeordnet, obwohl sie auch mittig oder am Innenumfang gelegen sein könnten. Dabei sollten die Beine 3 zumindest in Höhe der Rahmenebene 17 mit Metalleinlagen 18 versehen sein, um ein Umnicken oder Umbiegen der Beine im Bereich ihrer Anschlußstücke an den Rahmen 2 zu vermeiden. Die Beine 3 sind zweckmäßig gerade und außerdem mit ihren · Mittelachsen 19 senkrecht zur Rahmenebene 17 angeordnet, damit sich die anhand Fig. 1 bis 7 beschriebene Kombinations-möglichkeiten ergeben. Ferner sind die Beine 3 und die Metalleinlagen 18 vorzugsweise hohl, so daß sie an ihren Enden Aufnahmeöffnungen 20 aufweisen.

Entsprechend Fig.1 bis 8 weisen die Beine 3 weiterhin zweckmäßig zu beiden Seiten der Rahmenebene 17 je einen Abschnitt auf. Diese beiden Abschnitte sind vorzugsweise ungleich lang, wobei das Längenverhältnis vorzugsweise etwa 1:6 beträgt. Der Außenquerschnitt der Beine 3 sollte aus formalen Gründen im wesentlichen dem Außenquerschnitt des Rahmens entsprechen, wobei ein kreisrunder Querschnitt in Verbindung mit einem als zylindrischer Ring ausgebildete Rahmen 2 bevorzugt wird. Stattdessen können jedoch auch andere Querschnitte und Rahmen 2 in Quadrat- oder Rechteckform vorgesehen sein, die dann nicht zu zylindrischen, sondern quaderförmigen Grundformen der Standmöbel führen. Ein besonders formschönes Aussehen wird außerdem erzielt, wenn die Mittelachsen 19 der Beine die Rahmenebene 17 etwa am Außenumfang des Rahmens 2 schneiden (Fig.9). Der Rahmen 2 ist vorzugsweise durchgehend massiv, kann bei Bedarf aber auch mit einer stangen- oder rohrförmigen Metalleinlage versehen sein.

Um bei der Herstellung des Grundgestells 1 aus Kunststoff durch Spritzguß eine gute Stabilität zu erhalten, sollten die Beine 3 den Rahmen 2 zumindest teilweise, zweckmäßig etwa zur Hälfte (Fig.9) durchdringen. Durchdringen die Beine 3 den Rahmen entsprechend Fig.9 nicht mittig, dann besteht die Gefahr, daß sie beim Schrumpfprozeß nach dem Spritzgießen oberhalb und unterhalb der Rahmenebene 17 quer zu ihren Mittelachsen 19 abgebogen werden. Aus diesem Grund werden die Beine 3 vorzugsweise auf ihrer ganzen Länge hohl ausgebildet, damit die Metalleinlagen 18 nach dem Schrumpfprozeß oder auch direkt nach der Entformung, d.h. vor Abschluß des Schrumpfprozesses eingeschoben werden können, die einen dem Innenquerschnitt der Beine entsprechenden Außenquerschnitt aufweisen und die gebogenen Beine 3 wieder gerade stellen bzw. senkrecht zur Rehmenebene 17 ausrichten.

An ihren stirnseitigen Enden sind die Beine 3 mit bis zu den Stirnflächen 21 reichenden Ausnehmungen 22 versehen, die parallel zu den Mittelachsen 19 verlaufen und zur Aufnahme von axialen Verbindungselementen dienen, wie weiter unter näher erläutert wird.

Das beschriebene Grundgestell 1 läßt sich kostengünstig herstellen weist keine Stoßfugen auf, erleichtert das Zusammensetzen der Standmöbel, erfordert keine Nacharbeiten, besitzt eine große Stabilität und weist absolut drehfest mit dem Rahmen 2 verbundene Beine 3 auf.

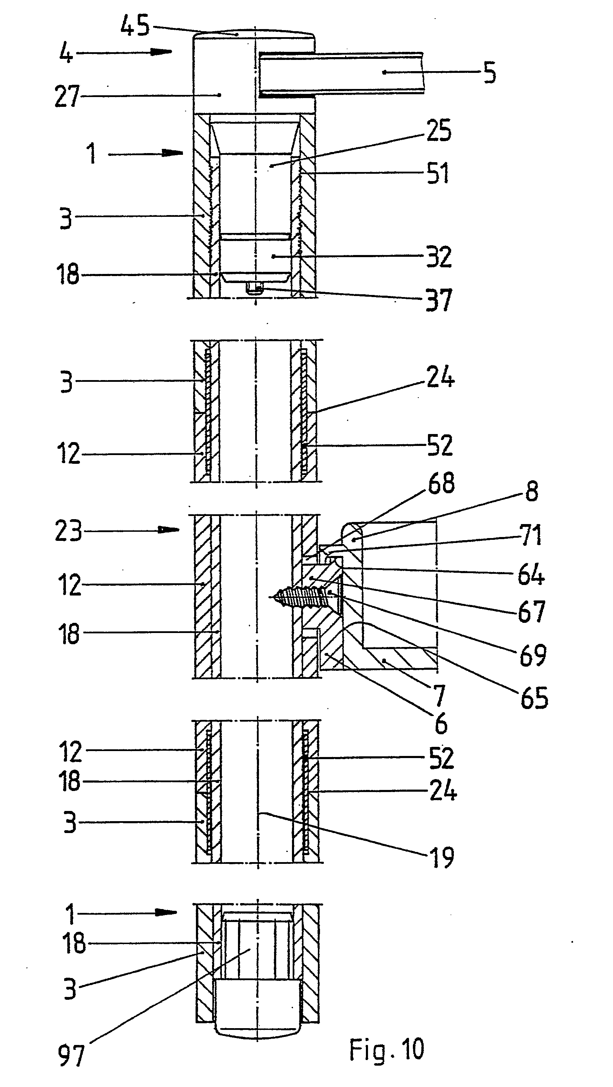

Fig. 10 zeigt im Längsschnitt eine einzelne, durchgehende Säule 23 eines Standmöbels, das aus einem unteren Grundgestell 1, einem oberen Grundgestell 1 und einem dazwischen liegenden Rohrelement 12 gebildet wird. Dabei weisen die Rohrelement 12 (oder massive Stangenelemente) vorzugsweise durchgehend denselben Außenquerschnitt wie die Beine 3 der Grundgestell 1 auf. Die Beine 3 und Rohrelemente 12 grenzen jeweils mit ihren Stirnseiten längs Stoßfugen 24 aneinander, so daß jede Säule 23 aus zwei koaxialen Beinen 3 besteht, die durch ein koaxiales Rohrelement 12 verbunden sind. Die Längen der Metalleinlagen 18 sind vorzugsweise entsprechend den Höhen des im Einzelfall herzustellenden Standmöbels des Satzes bemessen und daher, wie Fig.10 zeigt, praktisch über die ganze Länge der Säulen 23 des Standmöbels erstreckt. Hierdurch ergibt sich der Vorteil, daß alle Beine 3 und etwa zwischengeschaltete oder angefügte Rohrelemente 12 auf derselben Metalleinlage 18 aufgereiht sind und Säulen 23 mit hoher Stabilität und Stand sicherheit erhalten werden.

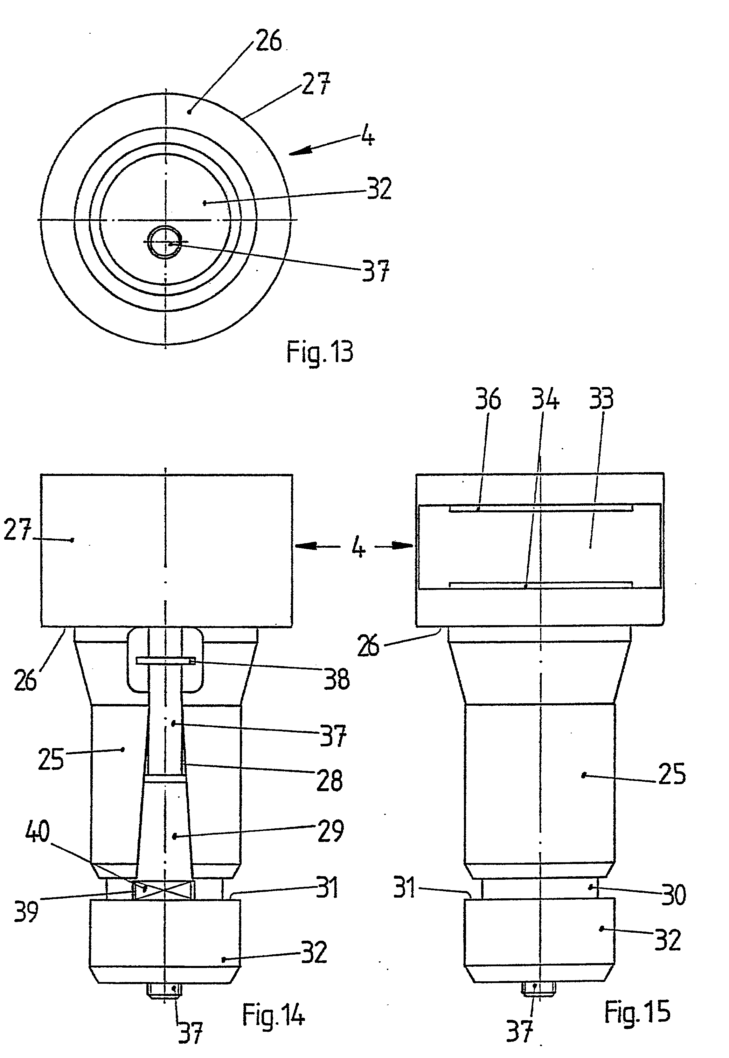

Einzelheiten des losen Plattenhalters 4 nach Fig. 1,2,4 und 7 sind in den Fig. 10 bis 15 dargestellt. Er enthält einen Grundkörper mit einem hohlen Innenabschnitt 25, der in die Aufnahmeöffnungen 20 der Beine 3 oder entsprechende Aufnahmeöffnungen der Stangen- oder Rohrelement 12 oder der Metalleinlage 18 mit Gleitsitz einschiebbar ist, und einen über eine Schulter 26 an diesen angrenzenden Außenabschnitt 27, dessen Außenquerschitt dem des Beins 3 oder eines Stangen- oder Rohrelements entspricht. Der Innenabschnitt weist einen durchgehenden, am unteren Ende beginnenden, nach oben konisch verjüngten Schlitz 28 auf, in dem ein konischer Spreizzapfen 29 angeordnet ist, der radial von einem in den Hohlraum des Innenabschnitts 25 eingeführten Klemmstück 30 absteht. Das Klemmstück 30 ist an seinem unteren, aus dem Innenabschnitt 25 herausragenden Ende über eine Schulter 31 mit einem verbreiterten Ansatz 32 versehen.

Der Außenabschnitt 27 weist eine etwa bis zu seiner Mittelachse reichende Aufnahme 33 zum Einschieben des Ablageelements 5 auf. Diese Aufnahme 33 ist an ihrer Unterseite durch ein starres Wandteil begrenzt, das mit einer nachgiebigen, zur Schonung des Ablageelements 5 dienenden Schicht 34 belegt ist, die gleichzeitig vorteilhaft einen hohen Reibungskoeffizienten besitzt und z.B. aus "BUMPON" der Fa. 3M besteht. Die Oberseite der Aufnahme 33 wird dagegen durch eine in axialer Richtung bewegliche, in einem Hohlraum des Außenteils 27 angeordnete Klemmplatte 35 begrenzt, die auf ihrer Unterseite ebenfalls mit einer nachgiebigen Schicht 36 belegt ist.

Die Klemmplatte 35, der Außenabschnitt 27 und der Innenabschnitt 25 sind von einer Spannschraube 37 durchragt, deren Kopf sich auf der Klemmplatte 35 abstützen kann und deren am unteren Ende befindliches Gewindeteil in ein Klemmstück 30 ragt. Dicht unterhalb des Außenabschnitts ist eine Sicherungsscheibe 38, z.B. ein Sprengring, auf die Spannschraube 37 aufgesetzt, der diese unverlierbar am Plattenhalter 4 hält, aber eine begrenzte Axialbewegung derselben im Außenabschnitt 27 zuläßt.

In einem mittleren Teil ist das Klemmstück 30 mit einem durch einen radialen Schlitz zugänglichen Hohlraum 39 versehen, in den eine auf das Gewinde der Spannschraube 37 passende Mutter 40 undrehbar eingesetzt ist. Außerdem ist das Gewindeteil der Spannschraube 37 durch einen gewindelosen Abschnitt 41 in zwei Abschnitte 42 und 43 unterteilt.

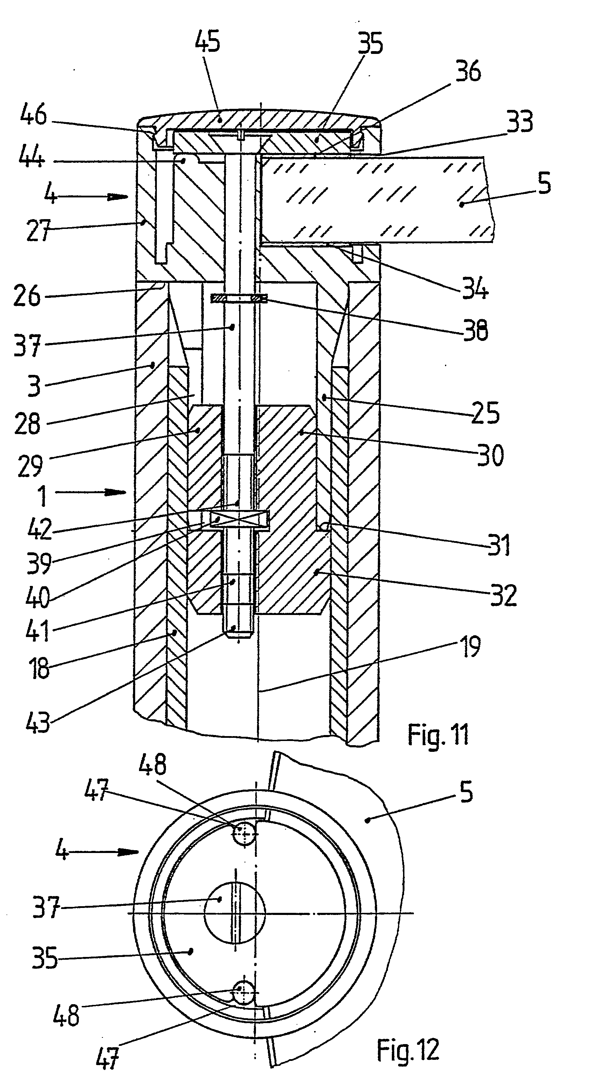

Zur Montage eines Ablageelements 5 werden an diesem zunächst entsprechend der Lage der vier Beine 3 (oder entsprechenden Rohrelementen 12) vier Plattenhalter nach Fig. 11 bis 15 lose angebracht, indem jeweils der Rand des Ablageelements 5 in die Aufnahmen 33 geschoben wird. Danach werden die Innenabschnitte 25 der Plattenhalter in die Aufnahmeöffnungen der zugehörigen Beine 3, Stangen- oder Rohrelemente 12 bzw. Metalleinlagen 18 eingeführt, bis deren Stirnflächen feine Stoßfugen mit den Schultern 26 bilden, und abschließend werden dann die Spannschrauben 37 angezogen. Da jeder Plattenhalter 4 so vormontiert ist, daß sein Spreizzapfen 29 bereits in den zugehörigen Schlitz 28 ragt, hat ein Festziehen der Spannschraube 37 ein immer tieferes Eindringen des Spreizzapfens 29 in den Schlitz 28 zur Folge. Dadurch wird der aus einem elastischen Material, z.B. einem Kunststoff, bestehende Innenabschnitt 25 gespreizt und fest gegen die diesen beispielsweise umschließende Metalleinlage 18 gelegt. Durch das Festziehen der Spannschraube 37 wird gleichzeitig das Klemmstück 30 angehoben, bis dessen Schulter 31 gegen die untere Stirnfläche des Innenabschnitts 25 stößt. Dabei ist die Lage der Schulter 31 so bemessen, daß der Plattenhalter 4 bei ihrem Anschlag an den Innenabschnitt 25 unlösbar in der Metalleinlage 18 befestigt ist.

Ein weiteres geringfügiges Anziehen der Spannschraube 37 hat zur Folge, daß ihr Kopf auf die Klemmplatte 35 einwirkt und diese gegen das Ablageelement 5 preßt, so daß dieses unlösbar zwischen der Klemmplatte 35 und dem gegenüberliegenden starren Wandabschnitt des Außenabschnitts 27 eingespannt wird.

Bei Anwendung von Beinen 3 mit kleinen Querschnitten und koaxial angeordneten Spannschrauben 37 reicht häufig der Platz nicht aus, um eine genügend große Aufnahme 33 für das Ablageelement 5 zu schaffen. Daher wird die Spannschraube 37, wie insbesondere Fig. 11 bis 13 zeigen, vorzugsweise so angeordnet, daß ihre Achse zwar parallel zur Mittelachse 19 des Beins 3, aber mit Abstand zu dieser angeordnet ist. In diesem Fall wird die Klemmplatte 35 von der Spannschraube 37 exzentrisch durchsetzt.

Um ein dadurch mögliches Verkanten bzw. Verschwenken der Klemmplatte 35 beim Festziehen der Spannschraube 37 zu vermeiden, ist die Klemmplatte 35 an ihrer der Aufnahme 33 diametral gegenüberliegenden Seite des Außenabschnitts 27 auf einem Vorsprung 44 abgestützt, so daß bei ihrem Festziehen eine Hebelwirkung eintritt.

Nach dem Festziehen aller Plattenhalter 4 werden diese mittels Deckkappen 45 abgedeckt, die mittels einer eine Schnappverbindung bildenden Hinterschneidung 46 am oberen Rand des Außenabschnitts 27 aufgeclipst werden. Da die Klemmplatte 35 wegen der engen räumlichen Verhältnisse einen Außenquerschnitt aufweist, der nur geringfügig kleiner als der Innenquerschnitt des Außenabschnitts 27 im Bereich der Hinterschneidung 46 ist, besteht bei exzentrisch angeordneter Spannschraube 37 die Gefahr, daß sich die Klemmplatte 35 beim Festziehen der Spannschraube 37 verdreht und dadurch mit ihrem Rand in den Bereich der Hinterschneidung 46 gelangt, was ein späteres Aufsetzen der Abdeckkappe unmöglich machen würde. Um dieses zu vermeiden, ist die Klemmplatte 35 mit zwei seitlichen Ausnehmungen 47 versehen(Fig.12), die von Führungszapfen 48 des Außenabschnitts 27 durchragt werden.

Sollen die Plattenhalter 4 wieder gelöst werden, beispielsweise weil ein aus einer Glasplatte bestehendes Ablageelement 5 gebrochen ist, wird beim Losdrehen der Spannschraube 37 zunächst die Klemmplatte 35 gelöst, während der Spreizzapfen 29 in seiner Klemmstellung verbleibt. Die Spannschraube 37 wird daher angehoben, bis die Sicherungsscheibe 38 gegen den unteren Rand des Außenabschnitts 27 stößt. Infolgedessen kann sich die Spannschraube 37 beim Weiterdrehen nicht weiter anheben, so daß nun der Spreizzapfen 29 im Schlitz 28 nach unten gedrückt und dadurch allmählich auch die Verspannung des Plattenhalters 4 gelöst wird. Dies geht so lange, bis die Mutter 40 in den gewindelosen Abschnitt 41 eintritt. Dabei ist die Lage der Mutter 40 und des Abschnitts 41 so gewählt, daß der Spreizzapfen 29 in diesem Moment gerade noch im Schlitz 28 angeordnet ist und nicht aus diesem herausfallen kann, was ein erneuertes Festspannen des Plattenhalters unmöglich und dessen völlige Demontage bzw. eine völlige Demontage des gesamten Ablageelementes 5 erforderlich machen würde. Um schließlich zu vermeiden, daß der untere Gewindeabschnitt 43 unbeabsichtigt doch einmal in die Mutter 40 eingedreht und dadurch das ganze Klemmstück 30 abgelöst werden könnte, wird der Abschnitt 43 nach der Vormontage des Plattenhalters 4 mit einem Hammer oder dergleichen so angeschlagen daß er nicht mehr in die Mutter 40 paßt.

Bei einer alternativen Ausführungsform besteht der Plattenhalter 4 lediglich aus dem Außenabschnitt 27, einem kurzen Ansatz des Innenabschnitts, der Aufnahme 33, der Klemmplatte 35 und der Abdeckkappe 45. Zu seiner Montage wird in diesem Fall in das obere Ende des Beins 3 oder dergleichen mit Klemmsitz ein Stopfen mit einem exzentrisch angeordneten Innengewinde eingeschlagen oder in sonstiger Weise befestigt, in das dann die Spannschraube 37 oder eine andere Bestigungsschraube eingedreht wird, die sowohl den Plattenhalter am Bein 3 befestigt als auch die Klemmplatte 35 am Ablageelement 5 verspannt.

Gemäßt Fig. 10 sind die Beine 3 und Rohrelemente 12 lose auf die durchgehenden, aus einem Stück bestehenden Metalleinlagen 18 aufgezogen. Selbst wenn dieses Aufziehen mit Preßsitz erfolgt, besteht die Gefahr, daß die Metalleinlagen 18 unbeabsichtigt herausfallen oder gewaltsam herausgedrückt werden können. Aus diesem Grunde werden die Metalleinlagen 18 an wenigstens einer Stelle an ihrem Umfang mit einer Rändelung 51 oder dergleichen versehen, die sich in die vorzugsweise aus Kunststoff bestehenden Beine 3 oder Rohrelemente 12 eingräbt und diese dadurch axial auf den Metalleinlagen 18 fixiert. Dadurch wird gleichzeitig eine Drehsicherung der Metalleinlagen 18 relativ zu den Beinen 3 oder Rohrelementen 12 erzielt.

Erfindungsgemäß sind die im Bereich der Stoßfugen 24 aneinandergrenzenden Beine 3 und/oder Rohrelemente 12 axial miteinander verbunden. Hierdurch wird zwar nicht vermieden, daß sich die Beine 3 und/oder Rohrelemente 12 unter dem Einfluß von Temperaturschwankungen relativ zur Metalleinlage 18 in axialer Richtung bewegen können. Es wird jedoch verhindert, daß dadurch eine unschöne und unhygienische Verbreiterung der Stoßfugen 24 bewirkt wird.

Es ist bekannt, daß Kunststoffe wie Polyamide, die vorzugsweise zur Herstellung der Beine 3 und Rohrelemente 12 verwendet werden, auch noch lange Zeit nach ihrer Herstellung schwinden können. Weiterhin kann sich der Kunststoff bei Temperaturerhöhungen dehnen und bei nachfolgender Abkühlung zusammenziehen. Auch eine Abkühlung allein kann ein axiales Zusammenziehen zur Folge haben. Bei starker Erwärmung können sich, über die gesamte Länge einer aus Beinen 3 und/oder Rohrelementen 12 zusammengesetzten Säule 23 betrachtet, leicht axiale Verschiebungen der einzelnen Teile von fünf Millimetern und mehr ergeben. Zwar wäre es möglich, derartigen Dehnungen, Verschiebungen und/oder Stauchungen durch eine gegenseitige Verspannung der Beine 3 und/oder Rohrelemente 12 entgegenzuwirken (DE-OS 26 32 696). Derartige Verspannungen sind jedoch aufwendig und daher bei einfachen Standmöbeln od. dgl. nicht immer erwünscht.

Erfindungsgemäß wird daher vorgeschlagen, die Beine 3 und/oder Rohrelemente 12 durch axial wirk-same, die Stoßfugen durchsetzende Verbindungs-elemente 52 (Fig. 10) miteinander zu verbinden, die in die an den Stirnflächen 21 endenden Ausnehmun-gen 22 (Fig. 8) eingesetzt werden.

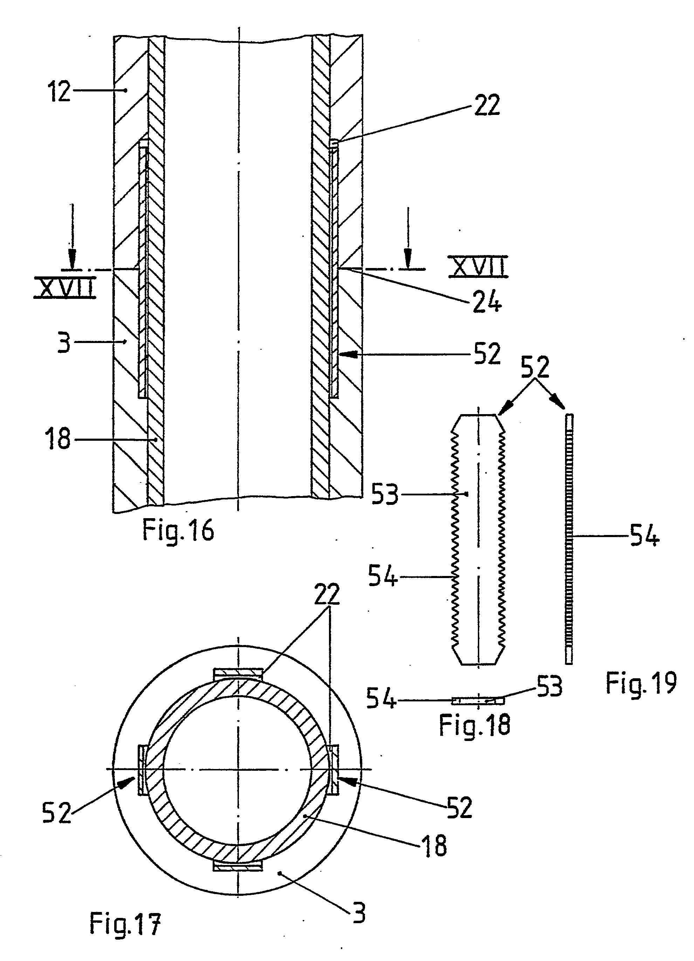

Gemäß Fig. 16 bis 19 können diese Verbindungselemente 52 beispielsweise aus Blechstreifen 53 bestehen, die an ihren Längsrändern mit Zahnungen 54 versehen sind. Die Breite dieser Blechstreifen 53 ist etwas größer als die Breite der Ausnehmungen 22, so daß sie sich bei der Montage in deren Seitenränder eingraben. Die Dicke der Blechstreifen 53 ist dagegen vorzugsweise etwas kleiner als die Dicke der Ausnehmungen 22 (Fig. 16 und 17), damit zwischen den Blechstreifen 53 und den Metalleinlagen 18 ein kleiner Hohlraum verbleibt. Durch Einschlagen der Verbindungselemente 52 in die Ausnehmungen 22 und axiales Annähern aneinandergrenzender Beine 3 und/oder Rohrelemente 12 bis zur Bildung feiner Stoßfugen werden feste axiale Verbindungen geschaffen. Diese haben zur Folge, daß sich die gesamte Kunststoff-Ummantelung einer Säule 24, die aus der Summe der aneinander gekoppelten Beine 3 und/oder Rohrelemente 12 ge-bildet wird, aufgrund von Temperaturschwankun-gen ausdehnen und dabei auf der Metalleinlage 18 verschieben kann, ohne daß dadurch die feinen Stoßfugen 24 größer werden. Ist dabei die gesamte Kunststoff-Ummantelung entsprechend Fig.10 an einer oberen, mittleren oder auch unteren Stelle durch eine Rändelung 51 mit der Metalleinlage 18 verbunden, wird die relative Lage der Kunststoff-Ummantelung zur Metalleinlage 18 auch nach mehrfachen Dehnungen oder Stauchungen nicht merklich verändert. Gleichzeitig bewirken die Blechstreifen 53 eine Drehsicherung. Ist daher eine Drehsicherung der gesamten Säule 24 beispielweise dadurch sichergestellt, daß die Beine 3 mit dem Rahmen 2 aus einem Stück bestehen und daher undrehbar sind, wird über die Verbindungselemente 52 auch eine Drehsicherung aller mit diesen Beinen 3 verbundenen Rohrelemente 12 erreicht.

Die Verbindungselemente 52 sind entsprechend Fig. 17 vorzugsweise an mehreren Stellen längs des Umfangs der Beine 3 und/oder Rohrelemente 12 vorgesehen, beispielsweise in Abständen von je 90°.

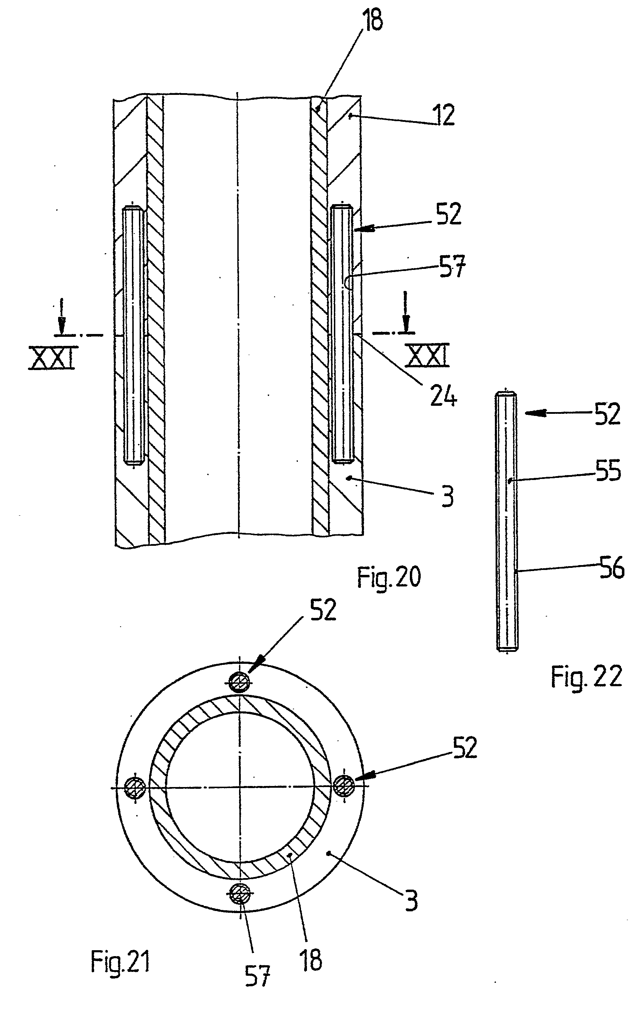

Gemäß Fig. 20 bis 22 können die Verbindungselemente 52 auch aus Stiften 55 bestehen, die an ihrem Umfang mit einem Gewinde 56, einer Zahnung, einer Rändelung oder dergleichen versehen sind, so daß wie bei Anwendung der gezahnten Blechstreifen Verbindungselemente erhalten werden, die axiale Relativverschiebungen zwischen miteinander ver-bunden Beinen 3 und/oder Rohrelementen 12 unmöglich machen. Die Stifte 55 werden in Ausnehmungen 57 eingesetzt, die wie die Ausnehmungen 22 an den Stirnflächen der Beine 3 und/oder Rohrelemente 12 enden, vom äußeren Umfang der Metalleinlagen 18 beabstandet sind und parallel zu deren Achsen verlaufen. Die Stifte 55 können wie die Blechstreifen 53 in Abständen von je 90° in den Beinen 3 und/oder Rohrelementen 12 angeordnet sein.

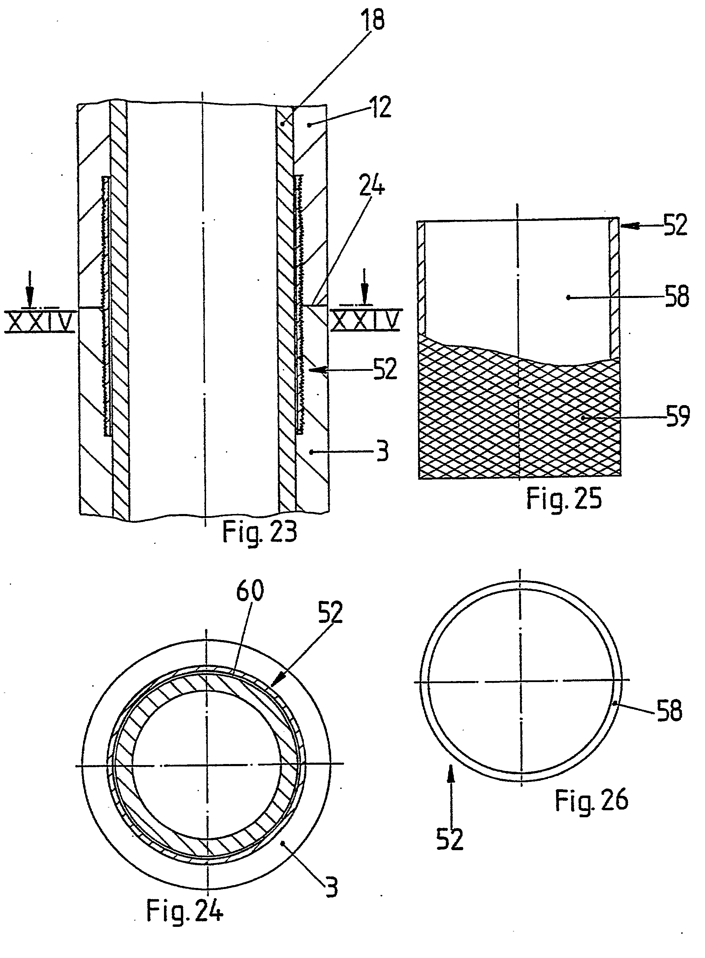

Gemäß Fig. 23 bis 26 können auch Verbindungselemente 52 in Form von Hülsen 58 vorgesehen sein, die an ihrem Außenmantel mit einer Rändelung 59 oder sonstigen axial wirksamen Aufrauhhung oder dergleichen versehen wird. Die Hülsen 58 werden in zylindrische, bis zu den Stirnflächen der Beine 3 und/oder Rohrelemente 12 reichende Ausnehmungen 60 eingesetzt und erhalten einen solchen Innendurchmesser, daß die sie durchragenden Metalleinlagen 18 gerade nicht berührt werden. Dadurch wird wie bei den anderen Beispielen sichergestellt, daß zwischen den Verbindungselementen 52 und den Metalleinlagen 18 keine Reibungen auftreten, die eine ungestörte Wanderung der gesamten Kunststoff-Ummantelung auf den Metalleinlagen 18 beeinträchtigen könnten.

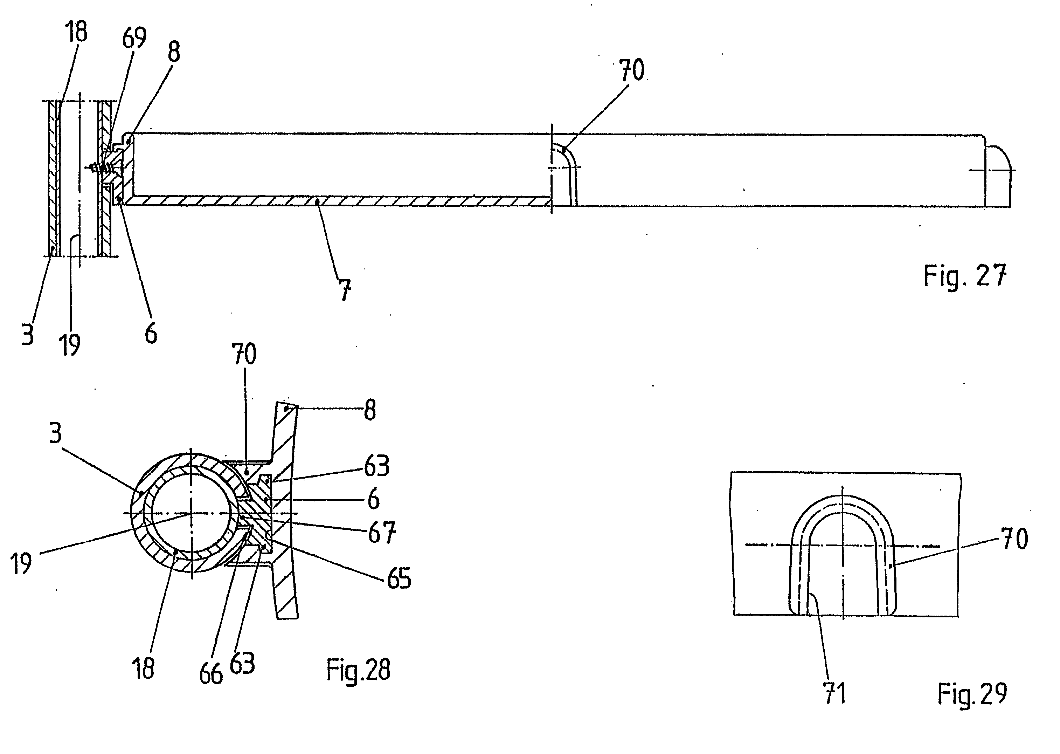

Fig. 27 bis 29 zeigen, ausgehend von Fig. 2, 4, 7 und 10, Einzelheiten der Schale 7 und ihrer Halterung 6. Die Halterung 6 besteht beispielsweise aus einer Platte, die zwei parallele Seitenränder 63, einen U-förmig gebogenen oberen Rand 64 (Fig.10), eine ebene Rückwand 65 und eine an einem Bein 3 oder einem Stangen-oder Rohrelement 12 anliegende und daher entsprechend ebene oder gekrümmte Montagewand 66 aufweist. Von dieser Montagewand 66 steht ein Vorsprung 67 ab, der in eine durchgehende Öffnung 68 (Fig.10) gesteckt wird, die im Bein 3 oder Stangen- oder Rohrelement 12 ausgebildet ist und parallel zur Achse 19 des Beins 3 länger ist, als der Längserstreckung des Vorsprungs 67 entspricht. Die Halterung 6 wird außerdem von einer Senkschraube 69 durchragt, die in eine Gewindebohrung der Metalleinlage 18 gedreht wird. Wegen der Länge der Öffnung 68 ist es möglich, daß sich das Bein 3 und/oder Stangen- oder Rohrelement 12 auch im ontierten Zustand der Halterung 6 relativ zur Metalleinlage verschieben kann. Vorzugsweise ist entsprechend Fig. 2, 4 und 7 an jedem Bein 3 und/ oder jedem Stangen- oder Rohrelement 12 eine Halterung 6 angebracht, wobei sämtliche Halterungen innen angeordnet sind.

Gemäß Fig. 27 und 29 weist die Schale 7 an den Halterungen 6 zugeordneten Stellen je einen U-förmigen Klemmbügel 70 auf. Dieser kann mit Klemmsitz von oben auf die Halterung 6 geschoben werden und ist mit einer die Seitenränder 63 und den oberen Rand 64 der Halterung 6 hintergreifende Kante 71 (Fig.10) versehen, die ein sicheres Festklemmen des Klemmbügels 70 auf der Halterung 6 gewährleistet. Der äußeren Umfang der Schale 7 entspricht vorzugsweise etwa der von den Innenrändern der Beine 3 und/oder der Stangen -oder Rohrelemente 12 begrenzten geometrischen Figur.

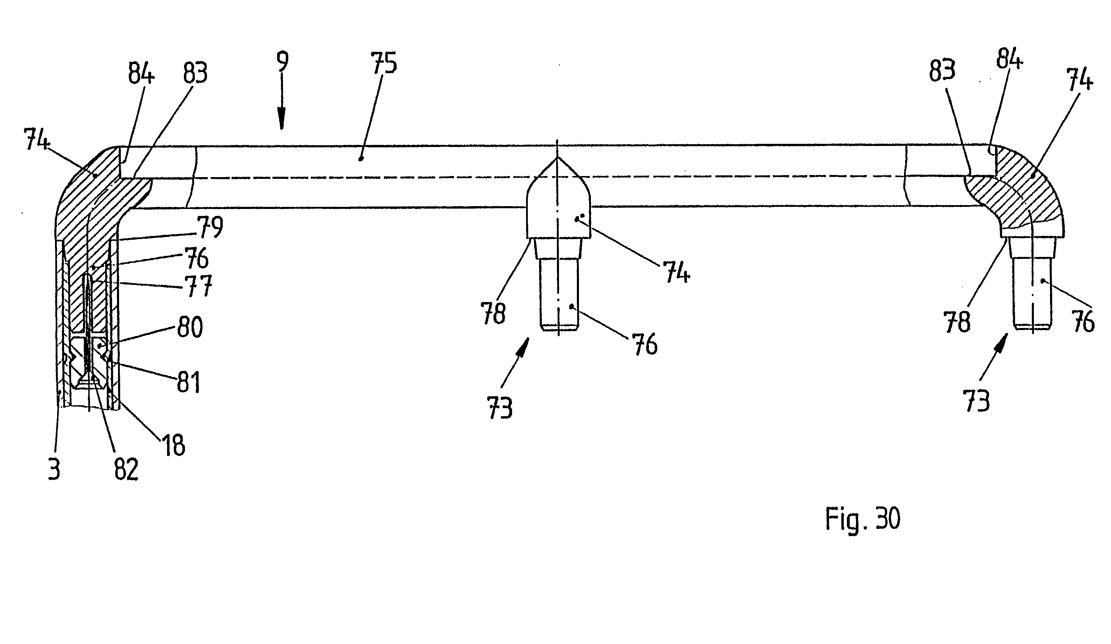

Fig. 30 zeigt ein Rahmenelement 9 entsprechend Fig. 3 und 5 und die zu seiner Montage benötigten Teile. Im Gegensatz zu dem Ausführungsbeispiel nach Fig.11 bis 15, bei dem das Ablageelement 5 mit Hilfe von vier separaten Plattenhaltern 4 am Grundgestell befestigt wird, weist das Rahmenelement 9 an entsprechenden Stellen vier feste Plattenhalter 73 auf. Dabei ist das Rahmenelement 9 vorzugsweise als Ganzes zusammen mit den Plattenhaltern 73 in einem Stück aus Kunststoff durch Spritzguß hergestellt. Jeder Plattenhalter 73 ist über einen Bogen 74 mit einem Rahmen 75 verbunden, der wie der Rahmen 2, das Ablageelement 5 und die Schale 7 beispielsweise als geschlossener Ring, als Quadrat, Rechteck oder dergleichen ausgebildet ist, und weist einen Zapfen 76 mit einer bis zu dessen stirnseitigem Ende reichenden, koaxialen Innenbohrung 77 auf. Der Zapfen 76 besitzt einen im wesentlichen dem Innenquerschnitt des Beins 3 und/oder des Stangen- oder Rohrelements 12 und/oder der rohrförmigen Metalleinlage 18 entsprechenden Außenquerschnitt auf und wird mit Klemmsitz in die obere freie Aufnahmeöffnung eines dieser Teile gesteckt. Der Bogen 74 weist dagegen einen Außenquerschnitt entsprechend dem Außenquerschnitt des Beins 3 und/oder Stangen-oder Rohrelements 12 auf und ist über eine Schulter 78 mit dem Zapfen 76 verbunden, die sich beim Eindrücken desselben unter Bildung einer feinen Stoßfuge 79 auf die Stirnfläche am Ende des Beins 3 und/oder Stangen-oder Rohrelements auflegt. Zur Befestigung der Zapfen 76 werden die Beine 3 und/oder Stangen-oder Rohrelemente 12 und/oder Metalleinlagen 18 mit einem Stopfen 80 versehen, der eine zentrale Bohrung besitzt und beispielsweise mittels einer Eindrückung 81 oder dergleichen axial fixiert wird.

Nach dem Eindrücken der Zapfen 76 werden jeweils vom entgegengesetzten Ende der Beine 3 und/oder Stangen-oder Rohrelemente 12 her Befestigungsschrauben 82 durch die Stopfen 80 in die Innenboh Beinen 3 und/oder Stangen-oder Rohrelementen fest. Damit die Befestigungsschrauben 82 angezogen werden können, muß das den Plattenhalter 73 aufnehmende Bein 3 und/oder Stangen- oder Rohrelement 12 gerade und hohl sein. Das Rahmenelement 9 weist einen längs seines Umfangs umlaufendes Auflageteil 83 auf, das seitlich von einer ebenfalls längs des Umfangs umlaufenden Schulter 84 begrenzt ist.

Das Auflageteil 83 und die Schulter 84 bilden eine Aufnahme beispielsweise für einen Einsatz in Form der aus Fig. 3 und 5 ersichtlichen Sitzplatten 10.

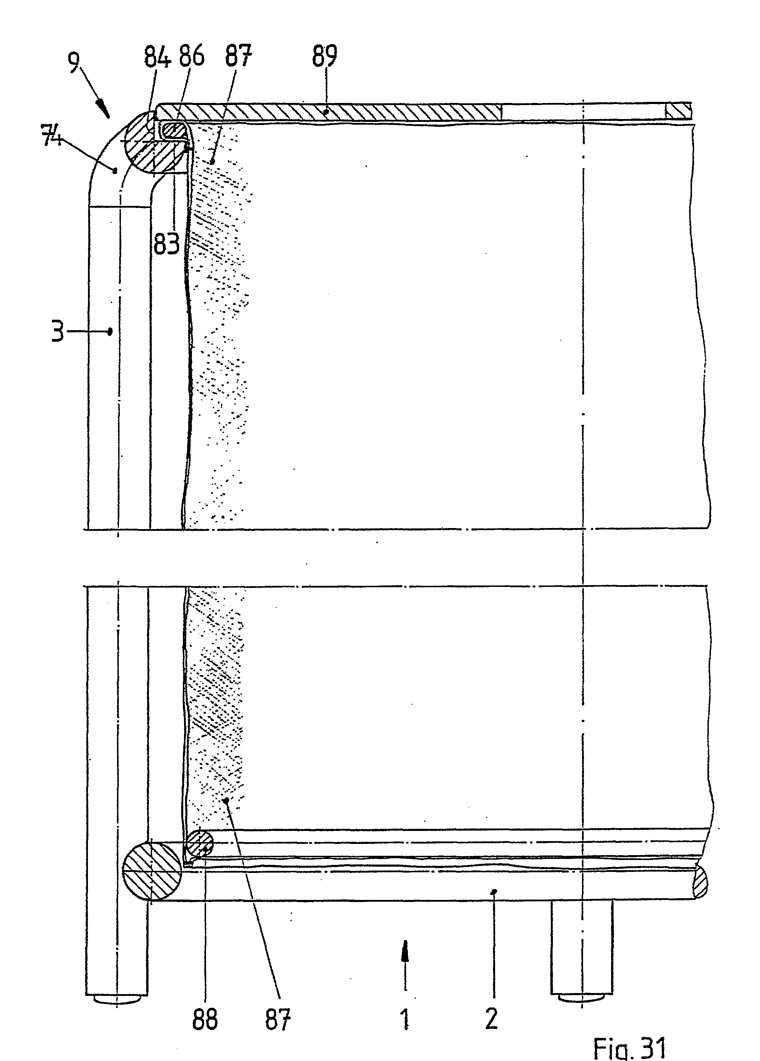

Bei der Ausführungsform nach Fig. 31 ist in das Rahmenteil 9 anstelle der Sitzplatte 10 ein Einsatz 86 in Form eines Rahmens eingelegt, der wie das Rahmenteil 9 ringförmig, quadratisch, rechteckförmig oder dergelichen ist. Dieser Einsatz 86 dient als Träger für einen Behälter 87, beispielsweise einen Wäschesack oder -beutal aus textilen Material oder Kunstfasergewebe, einen Einhängebehälter aus gelochten Kunststoffplatten, eine Einstellbehälter aus gelochtem Metallbelch (z.B.Aluminium oder Stahl) oder irgendeinen anderen schalen-, sieb- oder gitterförmigen ausgebildeten Behälter. Besteht der Behälter 87 aus einem Sack oder Beutel, dann ist der Einsatz 86 vorzugsweise in dessen oberes Ende eingenäht. Außerdem weist der Behälter 87 für diesen Fall an seinem unteren Ende vorzugsweise einen Ring 88 oder dergleichen aus Metall oder einem anderen, vorzugsweise schweren Material auf, der ebenfalls eingenäht sein kann und zur Formstabilisierung des Wäschesacks oder -beutels dient. Bei Anwendung anderder Behälterformen können diese auf beliebige Weise mit dem Einsatz 86 verbunden sein. Als Abdeckung nach oben wird der Einsatz 86 zweckmäßig mit einem Deckel 89 abgedeckt. Der Einsatz 86, der Ring 88 un der Deckel 89 können im übrigen aus beliebigen Materialien wie Kunststoff, Holz, Metall oder dergleichen hergestellt sein.

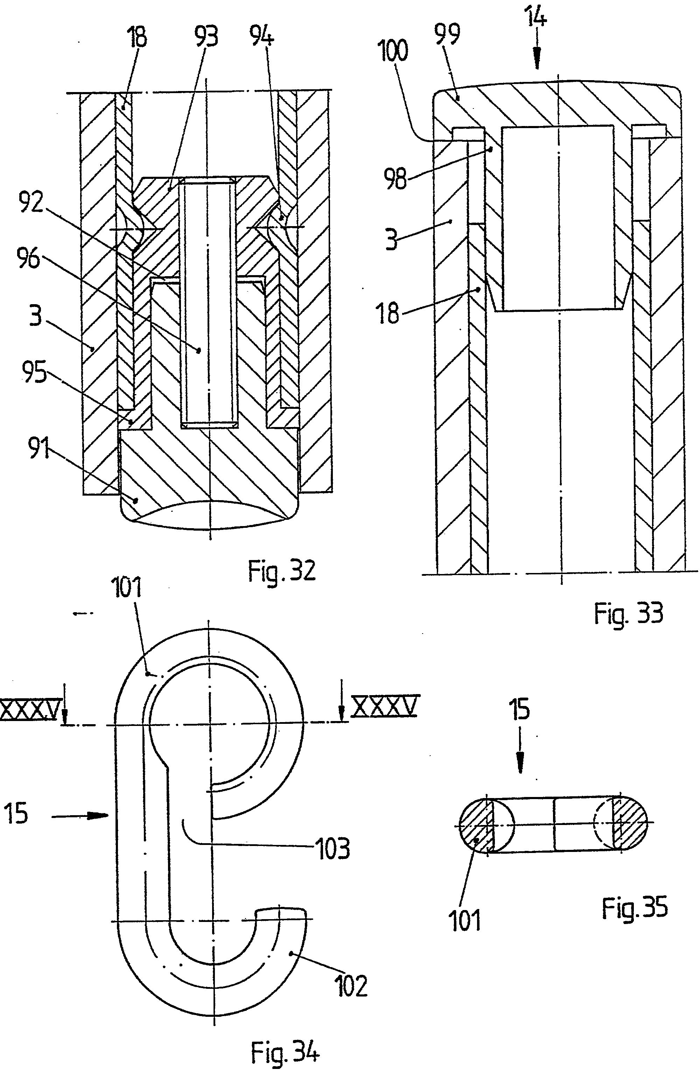

In Fig. 32 ist ein Zusatzelement des beschriebenen Standmöbelsatzes in Form eines Fußes 91 dargestellt. Dieser weist in einem unteren Abschnitt einen beispielsweise zylindrischen, dem Innenquerschnitt des Beins 3 oder der Metalleinlage 18 angepaßten Außenquerschnitt auf. Ein oberer Abschnitt weist dagegen einen kleineren Außenquerschnitt auf und ragt in eine zylindrische Aufnahmeöffnung 92 eines Stopfens 93, der im wesentlichen wie der Stopfen 79 nach Fig. 30 ausgebildet sein kann und beispielsweise mittels einer Eindrückung 94 und einer radial nach außen umgebogenen Kante 95, die die kurz vor der unteren Stirnfläche des Beins 3 endende Metalleinlage 18 untergreift, axial unverschieblich in der Metalleinlage 18 gehalten wird.

Im Stopfen 93 oder im Fuß 91 ist außerdem ein axialer Gewindebolzen 96 befestigt, der in eine entsprechende Gewindebohrung des jeweils anderen Teils eingedreht wird und eine Änderung der Länge des aus dem Bein 3 herausragenden Teils des Fußes 91 gestattet. Ist wenigstens eines der vier Beine mit einem solchen verstellbaren Fuß 91 versehen, können auf einfache Weise geringfügige Herstellungstoleranzen oder Bodenunebenheiten ausgeglichen und die Standmöbel wackelfrei aufgestellt werden. Die anderen drei Beine können mit entsprechenden, nicht verstellbaren Füßen 97 (Fig. 10) versehen sein.

Fig. 33 zeigt ein Zusatzelement für das Standmöbelsystem in Form der Abdeckkappe 14 (Fig.6), die einen Zapfen 98 aufweist, der mit Preßsitz in die Aufnahmeöffnungen an freien Enden der Beine 3 und/oder Stangen-oder Rohrelemente 12 und/oder Metalleinlagen 18 einsteckbar ist. Der Stopfen 98 ist mit einer Platte 99 verbunden, die sich beim Eindrücken des Stopfens 98 auf die Stirnflächen an den Enden der Beine 3 und/oder Stangen-oder Rohrelemente 12 auflegt und diese Enden unter Bildung feiner Stoßfugen 100 abdeckt. Der Außenquerschnitt der Platte 99 entspricht dabei dem der Beine 3 und/oder Stangen-oder Rohrelemente.

Fig. 34 und 35 zeigen schließlich ein Zusatzelement des Standmöbelsatzes in Form des Garderobehakens 15 (Fig.7). Dieser weist einen Montageabschnitt 101 und einen Hakenabschnitt 102 auf. Der Montageabschnitt 101 ist beispielweise zu einem nahezu vollständigen Ring gebogen, weist jedoch eine durchgehende Öffnung 103 auf. Der Montageabschnitt 101 besteht vorzugsweise aus einem elastisch biegbaren Material, z.B. Kunststoff, damit er im Bereich der Öffnung 103 aufgebogen und derart auf einen Rahmen 2 aufgeclipst werden kann, daß er bei Freigabe fest,jedoch verschiebbar und auch lösbar am Rahmen 2 aufgehängt ist. Der Hakenabschnitt 102 kann beliebig gestaltet werden.

Die Erfindung ist nicht auf die beschriebenen Ausführungsbeispiele beschränkt, die sich auf vielfache Weise abwandeln lassen. Dies gilt insbesondere für die äußere Form des Grundgestells 1, durch die im wesentlichen auch die äußere Form bzw. der Charakter der herstellbaren Standmöbel des Satzes bestimmt wird. Statt der in den Zeichnungen dargestellten runden und zylindrischen Formen können andere Formen gewählt werden. Weiter ist es möglich, den dargestellten Grundelementen weitere Elemente hinzuzufügen, beispielsweise Bogen-oder Knotenelemente, um den Hocker nach Fig. 3 oder den Barhocker nach Fig.5 mit Arm- und/oder Rückenlehnen zu versehen. Auch zusätzliche Plattenelemente können vorgesehen werden. So könnte beispielsweise der Rahmen 75 des Rahmenelements 9 so wie der Rahmen 2 des Grundgestells 1 ausgebildet sein, um eine zusätzliche Möglichkeit zum Anhängen der Garderobehaken 15 zu schaffen. Weiterhin wäre es möglich, die Glasplatte anstatt mit besonderen Plattenhaltern 4 einfach dadurch anzubringen, daß sie in das Rahmenelement 9 oder in eine Schale 7 eingelegt wird. Ein Sitzelement könnte dadurch geschaffen werden, daß in die Schale 7 ein Sitzkissen oder dergleichen eingelegt wird. Alternativ könnte eine mit den Plattenhaltern 4 befestigte Platte als Sitzelement dienen. Weiter wäre es denkbar, die Schale oder eine Sitzplatte mit Plattenhaltern 73 gemäß Fig. 30 aus einem Stück herzustellen und wie das Rahmenteil 9 zu befestigen. Umgekehrt lassen sich zusätzliche Ablageoder Rahmenelemente mit Halterungen 6 gemäß Fig. 27 und 29 befestigen. Bei allen diesen Kombinationsmöglichkeiten ergibt sich der Vorteil, daß jedes Standmöbel des Satzes auf dem Grundgestell 1 aufbaut, indem eine an sich beliebige Anzahl von Grundgestellen 1 mit einer an sich ebenfalls beliebigen Anzahl von Stangen-oder Rohrelementen 12 derart zusammengefügt wird, daß die Beine 3 und Stangen-oder Rohrelemente 12 in axialer Richtung durchlaufende Säulen ergeben, die durch die Rahmen 2 zu einem Traggestell verbunden sind. Dabei ist auch die Zahl der Beine 3 nicht unveränderbar,d.h. es können auch Standmöbelsätze geschaffen werden, die auf einem Grundgestell aufbauen, das beispielsweise drei oder fünf Beine aufweist.

Die beschriebenen, durchweg versteckt angebrachten Verbindungen zwischen den einzelnen Elementen stellen bevorzugte Ausführungsbeispiele dar, die ebenfalls abgewandelt und insbesondere dort, wo geringe Anforderungen an ihre Stabiltät gestellt werden, durch einfache Steck-oder Stiftverbindungen ersetzt werden können. Die beschriebenen Grund-,Platten-und Zusatzelemente werden vorzugsweise aus Kunststoff, z.B. polyamid, und durch Spritzguß hergestellt. Die Größen und Proportionen richten sich dabei nach den speziellen Bedürfnissen des Einzelfalles. Da der beschrieben Standmöbelsatz u.a. zur Herstellung eines Beistelltisches (Fig.1 und 2) und eines Hockers (Fig.3) dienen soll, beträgt die Länge der Beine 3 beispielsweise 40 cm, während der Durchmesser des Rahmens 2 45 cm beträgt.

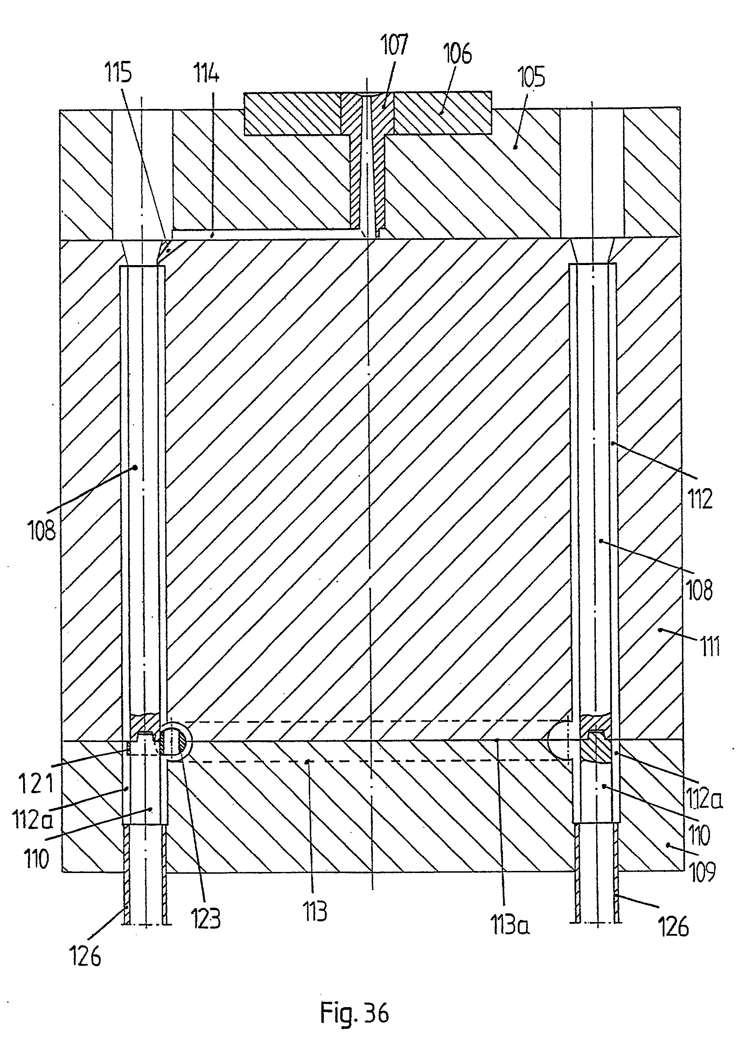

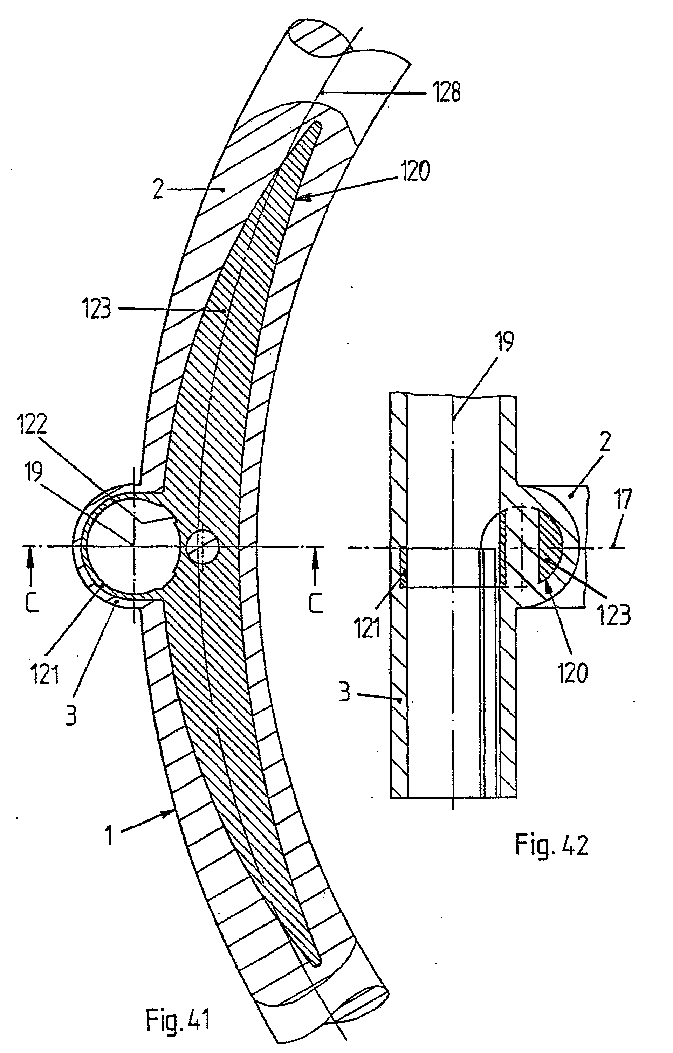

Nachfolgend wird anhand der Fig. 36 bis 42 eine bevorzugte Verfahrensweise zur Herstellung des Grundgestells 1 aus einem Stück durch Spritzgießen beschrieben.

Die verwendete Spritzgußmaschine enthält nach Fig. 36 bis 39 auf ihrer Angußseite ein angußseitige Werkzeugplatte 105 mit einem Zentrierflansch 106 und einer durch dessen Zentrum verlaufenden Angußbuchse 107. An der Werkzeugplatte 105 sind entsprechenden der Zahl der Beine 3 des Grundgestells 1 beispielsweise vier lange Kerne 108 fest angebracht, die einem dem Innenquerschnitt der Beine entsprechenden Außenquerschnitt aufweisen und senkrecht von der Werkzeugplatte 105 abstehen. Auf der Auswerferseite ist eine auswerferseitige Werkzeugplatte 109 parallel zu den Achsen der langen Kerne 108 verschiebbar gelagert, in der vier mit diesen koaxiale kurze Kerne 110 angeordnet sind, die vorzugsweise denselben Außenquerschnitt wie die langen Kerne 108 aufweisen und mit nicht dargestellten Mitteln ortsfest zur auswerferseitigen Werkzeugplatte 109 gehalten sind. Eine zwischen den beiden Werkzeugplatten angeordnete Matrize 111 weist entsprechend der Zahl der Beine 3 vier die langen Kerne 108 aufnehmende Bohrungen 112 auf, deren Querschnitte den Außenquerschnitten der Beine 3 entsprechen und die entsprechenden, koaxialen Bohrungen 112a in der auswerferseitigen Werkzeugplatte 109 gegenüberstehen, in welchen die kurzen Kerne 110 angeordnet sind. In den einander zugewandten Oberflächen der Matrize 111 und der auswerferseitigen Werkzeugplatte 109 ist je eine halbringförmige Ausnehmung derart ausgebildet, daß beide Ausnehmungen zusammen einen den Rahmen 2 des Grundgestells 1 formenden Ringraum 113 bilden und die Rahmenebene 17 (Fig. 8) in der Trennebene 113a zwischen der Matrize 111 und der auswerferseitigen Werkzeugplatte 109 zu liegen kommt. In der Trennebene 113a stoßen außerdem die sich gegenüberstehenden freien Enden der langen und kurzen Kerne 108 und 110 aneinander.

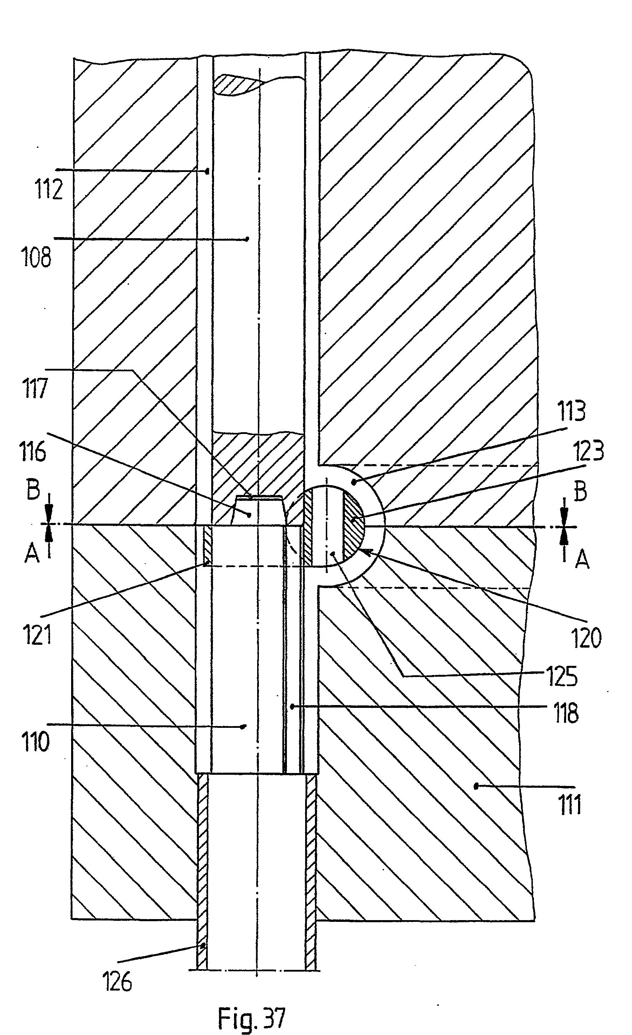

Die Angußbuchse 107 ist mit einem Verteilerkanal 114 verbunden, der in der der Matrize 111 zugewandten Oberfläche der Werkzeugplatte 105 ausgebildet ist und in der Nähe eines der langen Kerne 108 endet, wo die Matrize 111 mit einem nehezu senkrecht in die zugehörige Bohrung 112 mündenden Angußkanal 115 versehen ist. Der diesem Kern 108 gegenüberliegende kurze Kern 110 ist mit in Längsrichtung verlaufenden Vorsprüngen 118 versehen (Fig. 37). Außerdem sind zweckmäßig die freien Stirnflächen der einander gegenüberliegenden Enden der Kerne 108 und 110 mit ineinandergreifenden, zur gegenseitigen Zentrierung bestimmten Vorsprüngen 116 und Bohrungen 117 versehen.

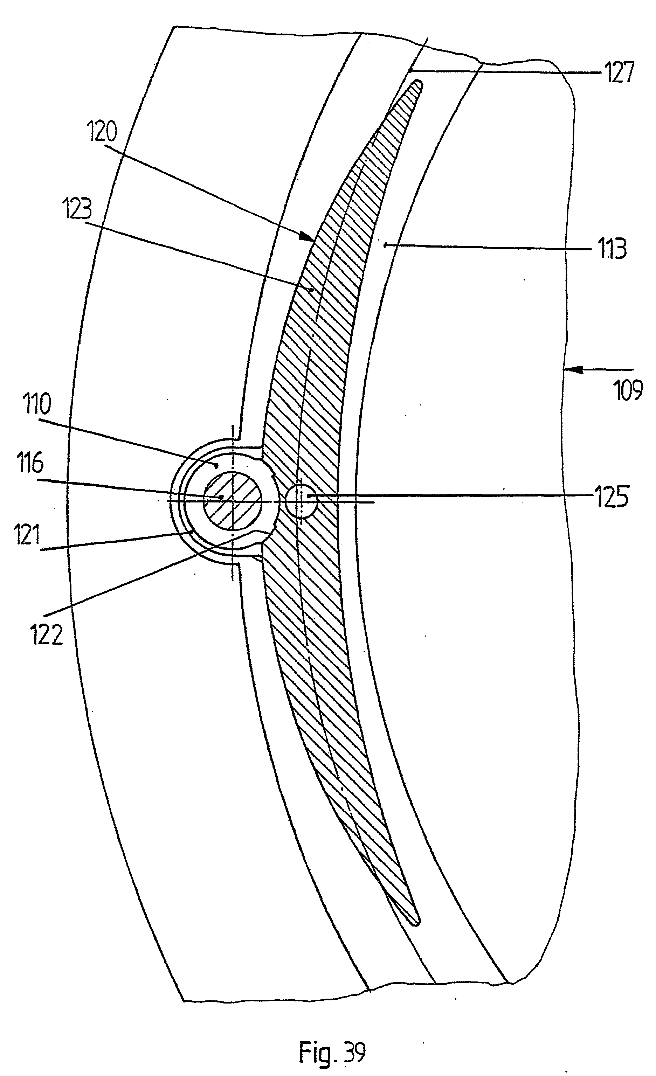

Ein erfindungsgemäßes Einlegeteil 120 weist einen Halteabschnitt 121 auf, der vorzugsweise aus einem Ring besteht, der auf seiner Innenseite derart mit nutenartigen Ausnehmungen 122 (Fig. 39) versehen ist, daß er nach Art einer Nut/Feder-Verbindung auf den die Vorsprünge 118 aufweisenden Kern 110 aufgeschoben werden kann, bis die Vorsprünge 118 am Ende der Ausnehmungen 112 an dort vorgesehenen Anschlägen anstoßen. Nach dem Aufschieben ist das Halteteil 121 drehfest auf dem Kern 110 angeordnet und gegen Längsverschiebung in Richtung der Auswerferseite gesichert. Der Außenquerschnitt des Halteabschnitts 121 ist kleiner als der Querschnitt der zugehörigen Bohrung 112a in der auswerferseitigen Werkzeugplatte 109.

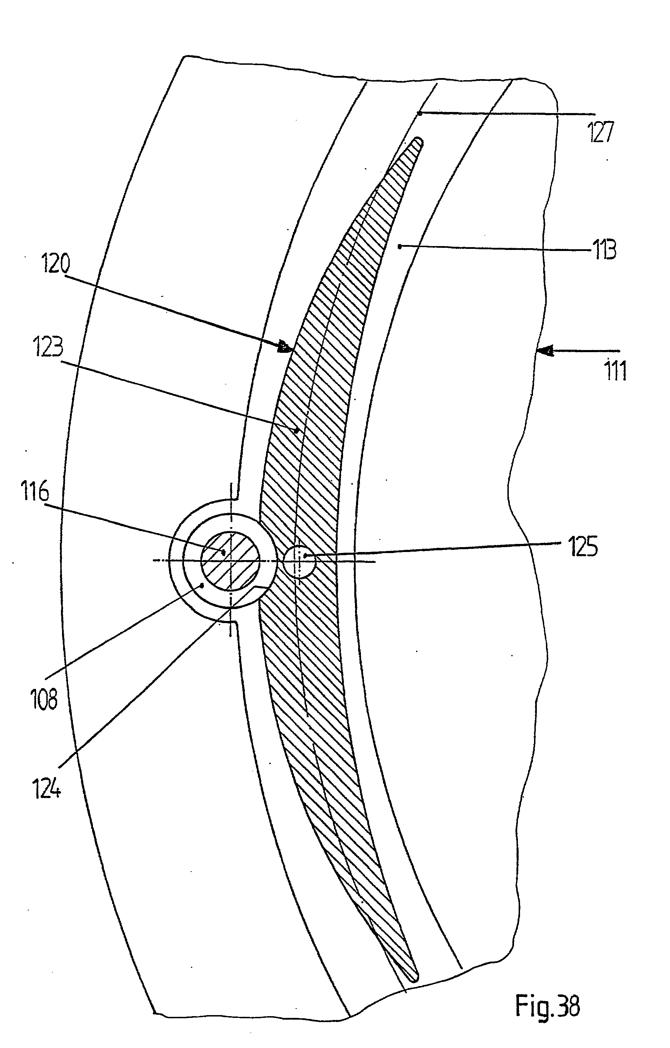

Das Einlegeteil 120 weist ferner einen mit dem Halteabschnitt 121 fest verbundenen Einlegeabschnitt 123 auf, der einen kleineren Querschnitt als der Ringraum aufweist und bei Anordnung des Halteabschnitts 121 auf dem zugehörigen kurzen Kern 110 im wesentlichen koaxial im Ringraum 113 zu liegen kommt, zumindest in demjenigen Bereich, der unmittelbar an den Halteabschnitt 121 angrenzt (Fig. 38).

Wie insbesondere aus Fig. 38 und 39 ersichtlich ist, weist der an den Halteabschnitt 121 grenzende Teil des Einlegeabschnitts 123 an seiner Außenseite eine die Innenbohrung des Halteabschnitts 121 fortsetzende Ausnehmung 124 auf, die nach dem Aufschieben des Halteabschnitts 121 auf den Kern 110 das Ende des zugehörigen langen Kerns 108 aufnehmen kann. An der vom Halteabschnitt 121 abgewandten Seite weist der Einlegeabschnitt 123 weiter eine parallel zur Achse des Halteabschnitts 121 bzw. parallel zu den Achsen der Kerne 108, 110 verlaufende Querbohrung 125 auf. Schließlich ist der Einlegeabschnitt 123 im wesentlichen ringförmig ausgebildet, so daß er auf seiner ganzen Länge etwa koaxial im Ringraum 113 angeordnet ist.

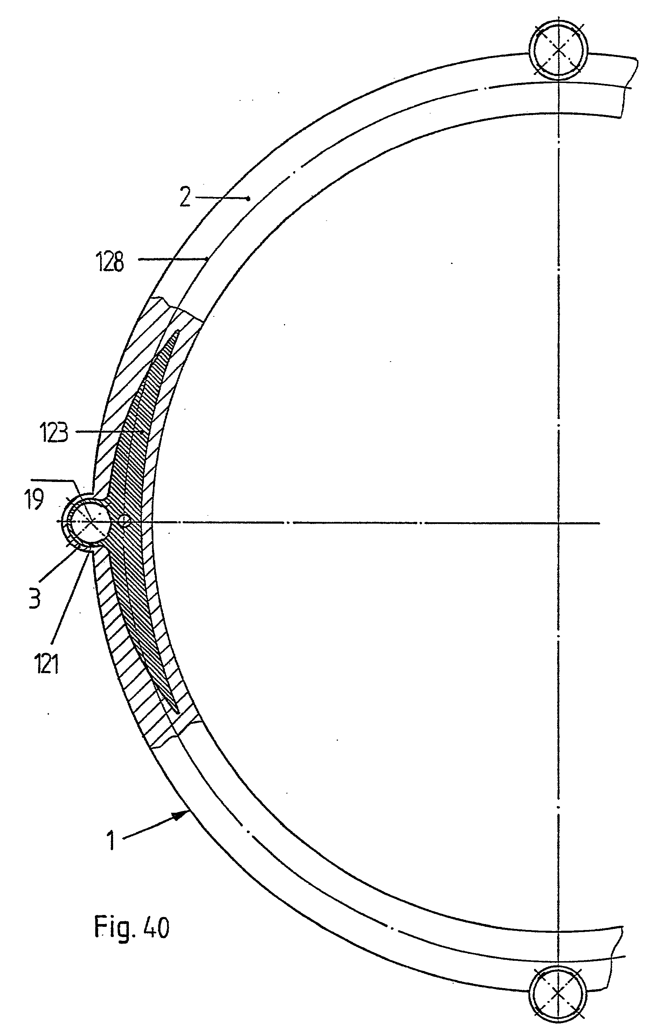

Zur Herstellung eines Grundgestells 1 wird die auswerferseitige Werkzeugplatte 109 zur Öffnung der Spritzform in eine von der Matrize 111 beabstandete, d.h. in Fig. 36 nach unten weggezogene Stellung bewegt. In dieser Position wird der Halteabschnitt 121 des Einlegeteils 120 auf den mit den Vorsprüngen 118 versehenen kurzen Kern 110 aufgesteckt. Danach wird die Spritzform durch Vorschieben der auswerferseitigen Werkzeugplatte 109 in die aus Fig. 36 ersichtliche Position geschlossen, wodurch das Einlegeteil 120 in der aus Fig. 36 bis 39 ersichtlichen Stellung innerhalb des Ringraums 113 zu liegen kommt. Nach der Füllung des so gebildeten Formnestes mit dem Spritzmaterial durch die Angußbuchse 107 und den Angußkanal 115 hindurch erfolgt zunächst die Abkühlung des hergestellten Sprtizteils. Danach wird die Spritzform geöffnet, indem die auswerferseitige Werkzeugplatte 109 wieder in Richtung Auswerfer, d.h. in Fig. 36 nach unten bewegt wird, wobei sie über nicht dargestellte Mittel die Matrize 111 mitnimmt. Da die angußseitige Werkzeugplatte 105 in ihrer Stellung verbleibt, werden bei dieser Bewegung die langen Kerne 108 aus dem Spritzteil, d.h. dem Grundgestell 1 herausgezogen. Sobald dies geschehen ist und die Kanäle 114, 115 vom Angußmaterial befreit sind, wird die Matrize 111 bis zur Anlage mit der angußseitigen Werkzeugplatte 105 zurückbewegt, wobei die langen Kerne 108 allmählich wieder in die Bohrungen 112 eintreten, während gleichzeitig die mit Hilfe der langen Kerne 108 gebildeten Abschnitte der Beine 3 des Grungestells allmählich aus den Bohrungen 112 der Matrize 111 herausgezogen werden. Anschließend wird dann das Spritzteil mittels Auswerferhülsen 126 von den kurzen Kernen 110 abgeschoben. Das fertige Spritzteil besitzt die aus Fig. 40 bis 42 ersichtliche Form, d.h. der Einlegeabschnitt 123 ist vollständig umspritzt und damit unsichtbar, während der Halteabschnitt 121 auf seinem Außenmantel umspritzt ist, und mit seinem Innenmantel freiliegt. Da der Halteabschnitt 121 jedoch in einem Mittelabschnitt des Beins 3 angeordnet ist, ist er ebenfalls nicht sichtbar.

Die Fixierung des vorzugsweise aus Kunststoff hergestellten Einlegeteils 120 in der Spritzform mittels des Halteabschnitts 121 nach Art einer Nut/Feder-Verbindung kann sich bei hohen Spritzdrucken als zu labil erweisen, reicht bei der gewählten Formgebung des Einlegeteils 120 jedoch aus, um dieses während der Füllung des Formnestes in der gewünschten Position zu halten, da der Strom des Spritzmaterials dabei stabilisierend wirkt. Demgegenüber wird durch das Anbrigen des Querlochs 125 eine verbesserte Stabilisierung erzielt und ein Abdriften des Einlegeteils zur Auswerferseite hin verhindert, möglicherweise dadurch, daß das Spritzmaterial an der Bohrungswand schneller erstarrt und dadurch eine Art Brücke bildet, die den Einlegeabschnitt 123 trägt. Außerdem trägt das Querloch 125 überraschenderweise zur Vermeidung von Fließfehlern in diesem Bereich bei.

Das erfindungsgemäße Verfahren bringt im übrigen eine Vielzahl von Vorteilen mit sich. Zunächst ist vorteilhaft, daß der Anguß des Grundgestells 1 an einer einzigen Stelle mit geringem Querschnitt, vorzugsweise am freien Ende des langen Abschnitts eines ausgewählten Beins 3 erfolgt. Dadurch werden Fließfehler und Nachbearbeitungen an der Angußstelle vermieden. Im Vergleich zu Verfahren, bei denen der Anguß von mehreren Seiten her, beispielsweise an allen vier Beinen, erfolgt, ergibt sich weiter der Vorteil, daß das Spritzmaterial nicht irgendwo innerhalb des Rahmens 2 an Stellen mit relativ großen Querschnitt unkontrolliert zusammenfließt und an diesen Stellen durch Luft- und Gaseinschlüsse bedingte Oberflächenfehler verursacht. Durch Anwendung des quer zur Achse des ausgewählten Beins angeordneten Ausgußkanals 115 wird das Spritzmaterial nahezu senkrecht auf den Kern 108 des ausgewählten Beins gelenkt, d.h. nicht in einen freien Raum gespritzt, wodurch ebenfalls Fließfehler in diesem Bereich vermieden werden. Die weitere Füllung des ausgewählten Beins 3, an dem der Anguß erfolgt, ist unkritisch bis zu der Stelle, an der das Bein 3 den Rahmen 2 schneidet. An dieser Stelle lieft eine Verzweigung des Formnestes mit unterschiedlichen Querschnitten vor. Normalerweise folgt der Materialstrom an derartigen Stellen dem Hauptzweig, d.h. dem Zweig mit dem größten Querschnitt und dem geringsten Fließwiderstand. Dagegen strömt das Spritzmaterial in Nebenzweige mit geringerem Querschnitt nur langsam ein, so daß der Materialstrom aufgrund Abkühlung an den kalten Wandungen des Formnestes sogar vorübergehend zum Stillstand kommen kann, was zu Fließfehlern führen würde. Derartige Fließfehler würden sich im Bereich der Schnittstelle zwischen dem ausgewählten Bein 3 und dem Rahmen 2 auch aufgrund der abrupten Querschnittsvergrößerung beim Übergang von der hohlzylindrischen Form des ausgewählten Beins zur vollzylindrischen Form des Rahmens 2 ergeben. Bei Anwendung des erfindungsgemäßen Einlegeteils 120 werden diese Probleme weitgehend vermieden. An der Verzweigungsstelle vom ausgewählten Bein 3 zum Rahmen 2 verhindert das Einlegeteil 120 eine abrupte Querschnittsvergrößerung und die damit verbundenen Oberflächenfehler. Gleichzeitig wird verhindert, daß der kurze Abschnitt des ausgewählten Beins 3 zu einem Nebenzweig mit kleinerem Querschnitt wird, in welchem der Materialfluß kurz nach Beginn des Formfüllungsvorgangs zum Stillstand kommen könnte.

Die zu beiden Seiten der Schnittstelle bzw. des Halteabschnitts 121 vorgesehenen Teile des Einlegeabschnitts 123, deren Querschnitte allmählich abnehmen und die daher in Spitzen auslaufen, erweitern den Querschnitt des den Rahmen 2 bildenden Ringraums 113 allmählich und kontinuierlich bis zu seiner vollen Größe. Hierdurch werden überraschend auch Oberflächenfehler in den darauf folgenden Rahmenabschnitten vermieden. Um derartige Fließfehler völlige zu vermeiden, ist der Einlegeabschnitt 123 erfindungsgemäß etwas stärker als der Ring gekrümmt (Fig.38 bis 41). Daher liegen die Enden des Einlegeabschnitts 123, obwohl dessen Achse im Bereich des ausgewählten Beins zunächst im wesentlichen koaxial zur Mittelachse 127 des Ringraums 113 bzw. zur Achse 128 des fertigen Rahmens 2 verläuft, auf der Innenseite dieser Achsen 127 bzw. 128.

Weitere kritische Stellen bei der Füllung des Formnestes vom Ende des ausgewählten Beins 3 her sind die Schnittstellen des Rahmens 2 mit denjenigen beiden Beinen 3, die dem ausgewählten Bein 3 benachbart sind. Da die an diesen Stellen befindlichen Verzweigungen jedoch relativ weit vom Anguß beabstandet sind und nicht zu abrupten Querschnittsvergrößerungen führen, kann durch geeignete Wahl der Spritzparameter (Druck, Temperatur, Geschwindigkeit der Schmelze) leicht erreicht werden, daß keine Fließfehler auftreten.

Schließlich ergibt sich noch dort eine kritische Stelle für den Spritzvorgang, wo das vierte Bein 3 in den Rahmen 2 einmündet bzw. die beiden im Bereich des Schnitts mit dem ausgewählten Bein 3 verzweigten Materialströme wieder zusammenfließen. Da das vierte Bein jedoch im Bereich der Zusammenflußstelle angeordnet ist, ergibt sich der Vorteil, daß Luft- und Gaseinschlüsse in Richtung der beiden offenen Beinenden entweichen können. Abgesehen davon findet keine abrupte Querschnittsvergrößerung statt, so daß insgesamt auch an dieser Stelle Fließ- bzw. Oberflächenfehler vermieden werden.

Eine mathematisch exakte Beschreibung für die Form des Einlegeteils 120, insbesondere des Einlegeabschnitts 123 kann nicht angegeben werden. Sie wäre auch abhängig von den Dimensionen des im Einzelfall herzustellenden Grundgestells 1. Die günstigste Form des Einlegeabschnitts 123 wird am einfachsten experimentell ermittelt. Bei dem in der Zeichnung dargestellten Ausführungsbeispiel stehen der Durchmesser des Ringraums 113 und der maximale Durchmesser des Einlegeabschnitts 123 in einem Verhältnis von etwa 3 : 2. Außerdem zeigen die Fig. 38, 39 und 41 die verschiedenen Teile in Originalgröße, woraus sich ergibt, daß die Länge des Einlegeabschnitts 123 im gewählten Beispiel ca. 21 cm beträgt. Mit einem solchen Einlegeteil 120 lassen sich die beschriebenen Grundgestelle 1 in der beschriebene Weise und frei von Fließ- und Oberflächenfehlern herstellen.

## Patentansprüche

1. Grundelement für überwiegend aus Kunststoff hergestellte Standmöbel, bestehend aus einem als Ganzes durch Spritzguß hergestellten, einstückigen Grundgestell mit einem Rahmen und mit wenigstens drei die Ebene des Rahmens durchschneidenden, den Rahmen zumindest teilweise durchdringenden Beinen, dadurch gekennzeichnet, daß der Rahmen (2) im Bereich seiner Schnittstelle mit einem ausgewählten Bein (3) ein Einlegeteil (120) mit einem im Rahmen (2) liegenden, entsprechend der Rahmenform gekrümmten Einlegeabschnitt (123) aufweist.

2. Grundelement nach Anspruch 1, dadurch gekennzeichnet, daß der Querschnitt des Einlegeteils (120) im Bereich der Schnittstelle am größten ist und von dort zu beiden Enden hin allmählich abnimmt.

3. Grundelement nach Anspruch 1 oder 2, dadurch gekennzeichnet, daß das Einlegeteil (120) einen im ausgewählten Bein (3) angeordneten Halteabschnitt (121) aufweist.

4. Grundelement nach einem der Ansprüche 1 bis 3, dadurch gekennzeichnet, daß der Halteabschnitt (121) aus einem zur Achse (19) des ausgewählten Beins (3) koaxialen Ring besteht, der auf seiner Innenfläche mit wenigstens einer Führungsnut (122) und/oder Führungsrippe versehen ist.

5. Grundelement nach einem der Ansprüche 1 bis 4, dadurch gekennzeichnet, daß der Einlegeabschnitt (123) im Bereich der Schnittstelle ein zur Achse (19) des Beins (3) paralleles Querloch (125) aufweist.

6. Grundelement nach wenigstens einem der Ansprüche 1 bis 5, dadurch gekennzeichnet, daß der Einlegeabschnitt (123) stärker als der Rahmen (2) gekrümmt ist und die beiden Enden des Einlegeabschnitts (123) innerhalb der Mittelachse (128) des Rahmens (2) liegen.

7. Grundelement nach einem der Ansprüche 1 bis 6, dadurch gekennzeichnet, daß die Beine (3) zumindest in Höhe der Rahmenebene (17) je eine Metalleinlage (18) aufweisen.

8. Grundelement nach Anspruch 7, dadurch gekennzeichnet, daß die Beine (3) hohl sind und daß die Metalleinlagen (18) durchgehend ausgebildet sind.

9. Grundelement nach wenigstens einem der Ansprüche 1 bis 8, dadurch gekennzeichnet, daß die Beine (3) auf jeder Seite der Rahmenebene (17) je einen Abschnitt aufweisen und das Längenverhältnis der beiden Abschnitte jedes Beins (3) etwa 1:6 beträgt.

10. Grundelement nach wenigstens einem der Ansprüche 1 bis 9, dadurch gekennzeichnet, daß der Rahmen (2) und die Beine (3) im wesentlichen denselben Außendurchmesser aufweisen.

11. Grundelement nach wenigstens einem der Ansprüche 1 bis 10, dadurch gekennzeichnet, daß der Rahmen (2) ein Ring mit kreisförmigem Querschnitt ist.

12. Grundelement nach wenigstens einem der Ansprüche 1 bis 11, dadurch gekennzeichnet, daß die Mittelachsen (19) der Beine (3) die Rahmenebene (17) etwa am Außenumfang des Rahmens (2) schneiden.

13. Grundelement nach wenigstens einem der Ansprüche 1 bis 12, dadurch gekennzeichnet, daß der Rahmen (2) aus einem massiven Bauteil besteht.

14. Verfahren zur Herstellung eines Grundelements nach wenigstens einem der Ansprüche 1 bis 13 durch Spritzgießen mittels eines Spritzwerkzeugs, das Bohrungen (112, 112a) zur Bildung der Beine und einen Ringraum (113) zur Bildung des Rahmens aufweist, dadurch gekennzeichnet, daß das Einlegeteil (120) vor dem Schließen des Spritzwerkzeugs im Bereich der Schnittstelle einer ausgewählten Bohrung (112, 112a) mit dem Ringraum (113) in diesem fixiert wird und der Anguß am freien Ende der ausgewählten Bohrung (112, 112a) erfolgt.

15. Verfahren nach Anspruch 13, dadurch gekennzeichnet, daß die Beine (3) unter Anwendung von in den Bohrungen (112, 112a) angeordneten Kernen (108, 110) hergestellt werden und das Einlegeteil (120) durch Aufstecken seines Halteabschnitts (121) auf einen der Kerne (108, 110) fixiert wird.

16. Verfahren nach Anspruch 13 oder 14, dadurch gekennzeichnet, daß bei der Herstellung eines Grundgestells (1) mit unterschiedlich langen Beinabschnitten, der Anguß am freien Ende des längeren Beinabschnitts erfolgt und der Halteabschnitt (121) auf das freie Ende des den kürzeren Beinabschnitt bildenden Kerns (110) aufgesteckt wird.

17. Verfahren nach einem der Ansprüche 13 bis 15, dadurch gekennzeichnet, daß der Anguß quer zur Achse der ausgewählten Bohrung (112, 112a) erfolgt.

**Revendications**

1. Elément de base pour un meuble stable fabriqué principalement en matière plastique, comprenant un châssis de base réalisé en tant qu'unité en une seule pièce moulée par injection et muni d'un cadre et d'au moins trois pieds qui coupent le plan du cadre et traversent au moins partiellement ledit cadre, caractérisé en ce que le cadre (2) comprend, dans la région de son point d'intersection avec un pied (3) sélectionné, une pièce d'insertion (120) avec une section d'insertion (123) placée dans le cadre (2) et cintrée suivant la forme du cadre.

2. Elément de base selon la revendication 1, caractérisé en ce que la section transversale de la pièce d'insertion (120) présente sa plus grande extension dans la région du point d'intersection à partir duquel elle diminue progressivement en direction des deux extrémités.

3. Elément de base selon l'une des revendications 1 ou 2, caractérisé en ce que l'élément de base (120) comprend une section de maintien (121) disposée dans le pied (3) sélectionné.

4. Elément de base selon l'une des revendications 1 à 3, caractérisé en ce que la section de maintien (121) est constituée d'une bague placée coaxialement à l'axe (19) du pied (3) sélectionné laquelle est munie à sa face intérieure d'au moins une rainure de guidage (122) et/ou une nervure de guidage.

5. Elément de base selon l'une des revendications 1 à 4, caractérisé en ce que la section d'insertion (123) présente, dans la région du point d'intersection, un trou transversal (125) parallèle à l'axe (19) du pied (3).

6. Elément selon au moins l'une des revendications 1 à 5, caractérisé en ce que la section d'insertion (123) est cintrée davantage que le cadre (2) et que les deux extrémités de la section d'insertion (123) se situent à l'intérieur de l'axe médian (128) du cadre (2).

7. Elément de base selon l'une des revendications 1 à 6, caractérisé en ce que les pieds (3) présentent chacun, au moins au niveau du plan du cadre (17), une garniture métallique (18).

8. Elément de base selon la revendication 7, caractérisé en ce que les pieds (3) sont creux et que les garnitures métalliques (18) sont continues.

9. Elément de base selon au moins l'une des revendications 1 à 8, caractérisé en ce que les pieds (3) présentent respectivement une section de chaque côté du plan du cadre (17) et que le rapport des longueurs des deux sections de chaque pied (3) est d'environ 1:6.

10. Elément de base selon au moins l'une des revendications 1 à 9, caractérisé en ce que le cadre (2) et les pieds (3) présentent sensiblement le même diamètre extérieur.

11. Elément de base selon au moins l'une des revendications 1 à 10, caractérisé en ce que le cadre (2) est constitué par une bague de section circulaire.

12. Elément de base selon au moins l'une des revendications 1 à 11, caractérisé en ce que les axes médians (19) des pieds (3) coupent le plan du cadre (17) approximativement à la périphérie extérieure du cadre (2).

13. Elément de base selon au moins l'une des revendications 1 à 12, caractérisé en ce que le cadre (2) est constitué par un élément massif.

14. Procédé de fabrication d'un élément de base selon l'une des revendications 1 à 13 par moulage par injection au moyen d'un moule à injection présentant des alésages (112, 112a) pour la formation des pieds et un espace annulaire (113) pour la formation du cadre, caractérisé en ce que la pièce d'insertion (120) est fixée, avant la fermeture du moule à injection dans la région du point d'intersection d'un alésage (112, 112a) sélectionné avec l'espace annulaire (113), dans ledit espace annulaire et que l'injection se fait à l'extrémité libre de l'alésage (112, 112a) sélectionné.

15. Procédé selon la revendication 13, caractérisé en ce que les pieds (3) sont réalisés avec l'utilisation de noyaux (108, 110) disposés dans les alésages (112, 112a) et que la pièce d'insertion (120) est fixée par l'emboîtement de sa section de maintien (121) sur l'un desdits noyaux (108, 110).

16. Procédé selon l'une des revendications 13 ou 14, caractérisé en ce que, lors de la réalisation d'un châssis de base (1) avec des sections de pieds de différentes longueurs, l'injection se fait à l'extrémité libre de la section de pied plus longue et que la section de maintien (121) est emboîtée sur l'extrémité libre du noyau (110) qui forme la section de pied plus courte.

17. Procédé selon l'une des revendications 13 à 15, caractérisé en ce que l'injection se fait transversalement à l'axe de l'alésage (112, 112a) sélectionné.

## Claims

1. Base element for standing furniture produced predominantly from plastics material, consisting of a base frame made in one piece as a whole by injection moulding, with a frame and at least three legs passing through the plane of the frame and at least partially intersecting the frame, characterized in that the frame (2) comprises an insert (120) in the region of its point of intersection with a selected leg (3), with an insert section (123) lying in the frame (2), curved in correspondence with the frame shape.

2. Base element according to claim 1, characterized in that the cross-section of the insert (120) is greatest in the region of the point of intersection and gradually decreases therefrom to the two ends.

3. Base element according to claim 1 or 2, characterized in that the insert (120) comprises a retaining section (121) in the selected leg (3).

4. Base element according to one of claims 1 to 3, characterized in that the retaining section (121) consists of a ring coaxial with the axis (19) of the selected leg (3), which ring is provided on its inside surface with at least one guide groove (122) and/or guide rib.

5. Base element according to one of claims 1 to 4, characterized in that the insert section (123) in the region of the point of intersection has a transverse hole (125) parallel to the axis (19) of the leg (3).

6. Base element according to at least one of claims 1 to 5, characterized in that the insert section (123) is curved more strongly than the frame (2) and the two ends of the insert section (123) lie inside the central axis (128) of the frame (2).

7. Base element according to one of claims 1 to 6, characterized in that the legs (3) each have a metal insert (18) at least at the height of the plane of the frame (17).

8. Base element according to claim 7, characterized in that the legs (3) are hollow and in that the metal inserts (18) are formed continuously.

9. Base element according to one of claims 1 to 8, characterized in that the legs (3) each have a section on both sides of the plane of the frame (17) and the ratio of lengths of the two sections of each leg (3) amounts to about 1:6.

10. Base element according to one of claims 1 to 9, characterized in that the frame (2) and the legs (3) have substantially the same outer diameter.

11. Base element according to one of claims 1 to 10, characterized in that the frame (2) is a ring with circular cross-section.

12. Base element according to one of claims 1 to 11, characterized in that the central axes (19) of the legs (3) intersect the plane of the frame (17) approximately at the outer periphery of the frame (2).

13. Base element according to at least one of claims 1 to 12, characterized in that the frame (2) consists of a solid component.

14. Method of making a base element according to at least one of claims 1 to 13 by injection moulding by means of an injection moulding tool which has bores (112, 112a) for forming the legs and an annular space (113) for forming the frame, characterized in that the insert (120) is fixed in the region of the point of intersection of a selected bore (112, 112a) with the annular space (113) before closing the injection moulding tool and the injection takes place at the free end of the selected bore (112, 112a).

15. Method according to claim 14, characterized in that the legs (3) are made using cores (108, 110) arranged in the bores (112, 112a) and the insert (120) is fixed by fitting its retaining section (121) on one of the cores (108, 110).

16. Method according to claim 14 or 15, characterized in that, in the production of a base frame (1) with leg sections of differing lengths, the injection is effected at the free end of the longer leg section and the retaining section (121) is fitted on to the free end of the core (110) forming the shorter leg section.

17. Method according to one of claims 14 to 16, characterized in that the injection is effected transverse to the axis of the selected bore (112, 112a).

Fig. 1

Fig. 2

Fig. 3

Fig. 4

Fig.5

Fig.6

Fig. 7

Fig.8

Fig. 9

Fig. 10

Fig. 11

Fig. 12

EP 0 193 201 B1

Fig.13

Fig.14

Fig.15

Fig.16

Fig.17

Fig.18

Fig.19

18

12

52

57

XXI

24

3

XXI

**Fig. 20**

52

55

56

**Fig. 22**

52

52

52

3

57

18

**Fig. 21**

18

12

24

52

3

XXIV    XXIV

Fig. 23

52

58

59

Fig. 25

60

52

3

Fig. 24

52

58

52

Fig. 26

Fig. 27

Fig. 28

Fig. 29

84 83 9 75 83 84 74

74

79
76
77

80

81

18

3 82

78 74

76

73

78

76

73

EP 0 193 201 B1

Fig. 30

Fig. 31

Fig. 32

Fig. 33

Fig. 34

Fig. 35

Fig. 36

Fig. 37

Fig.38

Fig. 39

Fig. 40

Fig. 41

Fig. 42